# EUROPÄISCHE PATENTSCHRIFT

(11) **EP 4 638 228 B1**
(45) Veröffentlichungstag und Bekanntmachung des Hinweises auf die Patenterteilung: **12.08.2026**
(21) Anmeldenummer: 23813721.0
(22) Anmeldetag: 28.11.2023
(51) Int. Cl.: B60W 50/06, B60W 60/00

(54) **VERFAHREN ZUM ERMITTELN EINER LEISTUNGSDISKREPANZ ZWISCHEN EINER SOLL-LEISTUNG UND EINER IST-LEISTUNG EINES FAHRZEUGAKTUATORS**
METHOD FOR DETERMINING A PERFORMANCE DISCREPANCY BETWEEN A TARGET PERFORMANCE AND AN ACTUAL PERFORMANCE OF A VEHICLE ACTUATOR
PROCÉDÉ DE DÉTERMINATION D'UN ÉCART DE PERFORMANCE ENTRE UNE PERFORMANCE CIBLE ET UNE PERFORMANCE RÉELLE D'UN ACTIONNEUR DE VÉHICULE

(30) Priorität: 20.12.2022 DE 102022134144
(43) Veröffentlichungstag der Anmeldung: 29.10.2025
(73) Patentinhaber: ZF CV Systems Global GmbH, 3006 Bern (CH)
(72) Erfinder: BIEBER, Benjamin, 30900 Wedemark (DE); BÖTTCHER, Jonas, 30455 Hannover (DE); PLÄHN, Klaus, 30926 Seelze (DE); WULF, Oliver, 31535 Neustadt (DE)
(74) Vertreter: Rabe, Dirk-Heinrich
(86) Internationale Anmeldenummer: PCT/EP2023/083323
(87) Internationale Veröffentlichungsnummer: WO 2024/132400

(56) Entgegenhaltungen:
- DE-A1- 102018 120 785
- US-A1- 2020 055 523
- US-A1- 2020 225 661
- US-A1- 2021 031 781
- US-A1- 2022 055 612

## Beschreibung

Die Erfindung betrifft Verfahren zum Ermitteln einer Leistungsdiskrepanz zwischen einer Soll-Leistung und einer Ist-Leistung eines Fahrzeugaktuators eines Fahrzeugs, wobei der Fahrzeugaktuator dazu ausgebildet ist, zumindest einen Bewegungsfreiheitsgrad eines Fahrzeugs zu beeinflussen. Ferner betrifft die Erfindung ein Aktuatorüberwachungssystem und ein Fahrzeug mit einem Aktuatorüberwachungssystem.

Fahrzeuge verfügen über eine Vielzahl von Fahrzeugaktuatoren, die auf Bewegungsfreiheitsgrade des Fahrzeugs einwirken bzw. dazu dienen, die Bewegungsfreiheitsgrade des Fahrzeugs zu beeinflussen. So dient beispielsweise ein Antriebsmotor eines Fahrzeugs in der Regel dazu, das Fahrzeug zu beschleunigen oder eine Geschwindigkeit des Fahrzeugs entgegen angreifender Widerstände, wie insbesondere einem Luftwiderstand und einem Reibungswiderstand des Fahrzeugs, konstant zu halten. Ein weiteres Beispiel für Fahrzeugaktuatoren sind ein Bremssystem des Fahrzeugs, das zum Verzögern des Fahrzeugs vorgesehen ist, und eine Lenkung des Fahrzeugs. Die Fahrzeugaktuatoren beeinflussen die Bewegungsfreiheitsgrade des Fahrzeugs in der Regel über einen gewissen Zeitraum und müssen hierfür in diesem Zeitraum eine Leistung erbringen. So ist die meist in kW oder Pferdestärken angegebene Antriebsleistung eines Antriebsmotors eine gängige Größe für Fahrzeuge. Aber auch andere Fahrzeugaktuatoren erbringen eine Leistung. So muss das Bremssystem des Fahrzeugs beispielsweise eine Bremsleistung bereitstellen, um die Geschwindigkeit des Fahrzeugs zu reduzieren.

Die US2020225661A1 offenbart Systeme eines autonomen Fahrzeugs und dessen Betrieb. Autonome Fahrzeuge können auf Dateneingaben, Prozesse und Ausgabebefehle angewiesen sein. Fehler aufgrund von Übersetzungsfehlern, ausgefallenen oder fehlerhaften Geräten, Verbindungen und anderen Komponenten können dazu führen, dass sich ein dynamischer Fahrzeugpfad einer dynamischen Sicherheitszone nähert oder umgekehrt. Wenn dies der Fall ist, kann eine Warnmeldung von dem Bewegungssteuerungssystem gesendet und verarbeitet werden, wenn das Fahrzeug korrekt auf Befehle reagiert, oder eine Aktuatorsteuerung, wenn das Fahrzeug nicht korrekt auf Befehle reagiert. Sollte eine Sicherheitszone neu gezeichnet werden, um den Weg des Fahrzeugs auszuschließen, wird eine Fehlermeldung zur Abschwächung an das entsprechende System gesendet.

Aufgrund verschiedener Einflüsse kann die Leistung eines Fahrzeugaktuators eingeschränkt sein. So kann eine Antriebsleistung eines Antriebsmotors beispielsweise aufgrund des Ausfalls eines Zylinders des Antriebsmotors, aufgrund schlechter Schmierung und/oder aufgrund von Verscheiß reduziert sein. Auch die Leistung von Bremsen des Fahrzeugs kann zeitweise oder dauerhaft eingeschränkt sein. So können Bremsen eines Fahrzeugs bei langen Gefällestrecken übermäßig beansprucht sein und sich stark erhitzen. Bei Temperaturen von 400°C oder mehr lässt die Bremsleistung herkömmlicher Reibbremsen in der Regel nach und eine von der Bremse bereitstellbare Bremsleistung ist reduziert. Dieses Phänomen wird auch als Fading bezeichnet. Kann ein Fahrzeugaktuator im Ist-Zustand eine Leistung, zu deren Bereitstellung der Fahrzeugaktuator vorgesehen ist, nicht erbringen, dann liegt eine Leistungsdiskrepanz zwischen einer tatsächlichen Ist-Leistung und einer Soll-Leistung vor. Diese Leistungsdiskrepanz kann insbesondere bei Bremsen oder einer Lenkung des Fahrzeugs sicherheitskritisch sein. So können beispielsweise Bremsscheiben eines Bremssystems des Fahrzeugs nach längerer Standzeit angerostet sein, sodass die von dem Bremssystem bereitstellbare Bremsleistung reduziert ist. Ein Fahrer des Fahrzeugs, erkennt diese Leistungsdiskrepanz jedoch unter Umständen nicht, sodass sie/er das Fahrzeug möglicherweise unangepasst steuert. Wird dann eine Bremsleistung angefordert, die von dem Bremssystem nicht bereitstellbar ist, kann dies zu Unfällen führen.

Es ist daher Aufgabe der Erfindung ein Verfahren bereitzustellen, das das Ermitteln einer Leistungsdiskrepanz des Fahrzeugs erlaubt und eine erhöhte Sicherheit bietet. Ferner ist es Aufgabe der Erfindung ein Aktuatorüberwachungssystem und ein Fahrzeug anzugeben, die eine erhöhte Sicherheit bieten.

Die Erfindung löst diese Aufgabe in einem ersten Aspekt mit einem Verfahren der eingangs genannten Art, das die folgenden Schritte aufweist: Ermitteln eines Bewegungsfreiheitsgrad-Sollwerts für das Fahrzeug; Ermitteln eines Stellgrößen-Erwartungswerts zum Erreichen des Bewegungsfreiheitsgrad-Sollwerts; Ermitteln eines Bewegungsfreiheitsgrad-Istwerts für das Fahrzeug, der zu dem Bewegungsfreiheitsgrad-Sollwert korrespondiert; Ermitteln eines Stellgrößen-Istwerts, der zum Erreichen des Bewegungsfreiheitsgrad-Istwerts am Fahrzeugaktuator bereitgestellt wird; Erhalten eines Stellgrößen-Maximalwerts des Fahrzeugaktuators; und Ermitteln der Leistungsdiskrepanz des Fahrzeugaktuators, falls der Bewegungsfreiheitsgrad-Istwert außerhalb einer Bewegungsfreiheitsgrad-Toleranz um den Bewegungsfreiheitsgrad-Sollwert liegt und der Stellgrößen-Istwert geringer ist als der Stellgrößen-Maximalwert; der Bewegungsfreiheitsgrad-Istwert außerhalb einer Bewegungsfreiheitsgrad-Toleranz um den Bewegungsfreiheitsgrad-Sollwert liegt, der Stellgrößen-Erwartungswert dem Stellgrößen-Maximalwert entspricht und der Stellgrößen-Istwert dem Stell-größen-Maximalwert entspricht, oder falls der Bewegungsfreiheitsgrad-Istwert dem Bewegungsfreiheitsgrad-Sollwert entspricht und der zum Erreichen des Bewegungsfreiheitsgrad-Istwerts benötigte Stellgrößen-Istwert außerhalb einer Stellgrößen-Toleranz um den Stellgrößen-Erwartungswert liegt. Das Verfahren weist vorzugsweise ferner auf: Ermitteln eines aktualisierten Bewegungsfreiheitsgrad-Maximalwerts des Fahrzeugs basierend auf der ermittelten Leistungsdiskrepanz.

Die Leistungsdiskrepanz muss nicht zwingend eine Größe sein, die einer physikalische Leistung der Einheit Watt entspricht. So kann die Leistungsdiskrepanz auch durch eine Diskrepanz einer von dem Fahrzeugaktuator bereitstellbaren Kraft, wie beispielsweise einer Bremskraft, eines vom dem Fahrzeugaktuator bereitstellbaren Drehmoments, eines von dem Fahrzeugaktuator bereitstellbaren Stroms, einer von dem Fahrzeugaktuator bereitstellbaren Spannung und/oder eines von dem Fahrzeugaktuator bereitstellbaren Winkels, insbesondere eines Lenkwinkels, sein. So kann beispielsweise eine Leistungsdiskrepanz einer Bremse des Fahrzeugs auch dadurch erkennbar sein, dass das Bremssystem oder eine Bremse des Bremssystems eine Ist-Bremskraft bereitstellt, die kleiner ist als eine Soll-Bremskraft. Die geringere Bremskraft bedingt dann auch eine geringere Bremsleistung.

Mittels des erfindungsgemäßen Verfahrens kann eine Leistungsdiskrepanz, also eine Abweichung zwischen einer erwarteten Leistung (Soll-Leistung) des Fahrzeugaktuators und einer tatsächlichen Leistung (Ist-Leistung), situationsabhängig auf zumindest zwei Arten ermittelt werden. Wird der Sollwert des Bewegungsfreiheitsgrads (Bewegungsfreiheitsgrad-Sollwert) nicht erreicht bzw. ist dieser vom Bewegungsfreiheitsgrad-Istwert verschieden, wird eine Abweichung ermittelt, falls der Stellgrößen-Erwartungswert und der Stellgrößen-Istwert dem Stellgrößen-Maximalwert entspricht. Wird beispielsweise trotz Vorgabe eines maximalen Bremsdrucks von 10 bar nur eine Verzögerung des Fahrzeugs von 5 m/s² erreicht (Bewegungsfreiheitsgrad-Istwert = 5 m/s²), obwohl der Sollwert für den maximalen Bremsdruck 7 m/s² beträgt (Bewegungsfreiheitsgrad-Sollwert = 7 m/s²), ist dies ein Indikator dafür, dass ein Bremssystem des Fahrzeugs (der Fahrzeugaktuator) nicht die gewünschte Verzögerung bereitstellen kann (d.h. dass eine Leistungsdiskrepanz des Bremssystems vorliegt). Gleiches gilt, wenn der Bewegungsfreiheitsgrad-Sollwert nicht erreicht werden kann, obwohl der Stellgrößen-Istwert nicht dem Stellgrößen-Maximalwert entspricht. Dies ist beispielsweise der Fall, wenn an einer oder mehreren Bremsen des Bremssystems anstelle eines Stellgrößen-Maximalwerts von 10 bar aufgrund eines Schadens, einer vorgegebenen Bremsdruckbegrenzung und/oder thermischer Überlastung nur ein Stellgrößen-Istwert von 7 bar bereitgestellt werden kann.

In der zweiten Variante entspricht der Bewegungsfreiheitsgrad-Istwert dem Bewegungsfreiheitsgrad-Sollwert. Es wird also beispielsweise eine gewünschte Verzögerung des Fahrzeugs von 3 m/s² erreicht. Allerdings wird zum Erreichen dieser Verzögerung ein Stellgrößen-Istwert benötigt, der größer ist, als ein Stellgrößen-Erwartungswert. Im vorbeschriebenen Beispiel muss anstelle eines vorhergesagten Bremsdrucks (Stellgrößen-Erwartungswert) von 4 bar ein tatsächlicher Bremsdruck von 6 bar (Stellgrößen-Istwert) bereitgestellt werden, um die gewünschte Sollverzögerung zu erreichen. Dies kann beispielswiese dadurch bedingt sein, dass eine oder mehrere Bremsscheiben des Bremssystems nach langer Standzeit angerostet ist, oder dass Bremsbeläge aufgrund einer vorhergehenden hohen thermischen Belastung verglast sind. Auch aus der Abweichung von Stellgrößen-Istwert und Stellgrößen-Erwartungswert kann daraus kann geschlossen werden, dass die Leistung des Fahrzeugaktuators (im vorliegenden Beispiel der Bremse), nicht einer erwarteten Leistung entspricht.

Der Bewegungsfreiheitsgrad-Sollwert ist ein von einem menschlichen Fahrer oder einer (teil-)autonomen Einheit, auch virtueller Fahrer genannt, für das Fahrzeug angeforderter Sollwert des Bewegungsfreiheitsgrads. Der Bewegungsfreiheitsgrad ist vorzugsweise eine Änderung der Längsdynamik des Fahrzeugs, also eine Längsbeschleunigung oder Längsverzögerung des Fahrzeugs. Der Bewegungsfreiheitsgrad-Sollwert ist dann beispielsweise eine vom Fahrer oder einer autonomen Einheit angeforderte Verzögerung des Fahrzeugs von z.B. 2 m/s². Der Bewegungsfreiheitsgrad-Istwert bezieht sich auf den Bewegungsfreiheitsgrad-Sollwert, sodass der Bewegungsfreiheitsgrad-Istwert und der Bewegungsfreiheitsgrad-Sollwert den Bewegungsfreiheitsgrad derselben Fahrsituation beschreiben. Bewegungsfreiheitsgrad-Istwert und Bewegungsfreiheitsgrad-Sollwert betreffen stets den gleichen Bewegungsfreiheitsgrad.

Der Stellgrößen-Erwartungswert für den Fahrzeugaktuator wird im Rahmen des Verfahrens vorzugsweise vorhergesagt oder prädiziert. Das heißt es wird eine Prädiktion oder Vorhersage darüber getroffen, welche Stellgröße am Fahrzeugaktuator bereitgestellt werden muss, um den Sollwert des Bewegungsfreiheitsgrads zu erreichen. Im Verfahren wird ein Stellgrößen-Erwartungswert ermittelt, wobei der Stellgrößen-Erwartungswert angibt, welcher Wert der Stellgröße gemäß einer Vorhersage an dem Fahrzeugaktuator bereitgestellt werden muss, um die Bewegungsfreiheitsgrad-Sollwert zu erreichen. Vorzugsweise erfolgt die Prädiktion basierend auf und/oder unter Verwendung gelernter Fahrdaten des Fahrzeugs. Beispielsweise kann der Stellgrößen-Erwartungswert ein Stellgrößen-Istwert sein, der für eine vergleichbare oder identische Fahrzeugkonfiguration am Fahrzeugaktuator bereitgestellt wurde und zu einem Bewegungsfreiheitsgrad-Istwert geführt hat, der dem Bewegungsfreiheitsgrad-Sollwert entspricht oder zu diesem vergleichbar ist. Alternativ oder ergänzend kann die Prädiktion auch basierend auf und/oder unter Verwendung eines Fahrzeugmodells erfolgen. Der Stellgrößen-Erwartungswert ist ein Wert der Stellgröße, der gemäß einer Prädiktion oder Prognose zum Erreichen des Bewegungsfreiheitsgrad-Sollwerts am Fahrzeugaktuator bereitgestellt werden soll.

Die Bewegungsfreiheitsgrad-Toleranz ist dazu vorgesehen, geringfügige Schwankungen des Istwerts zu kompensieren, die beispielsweise aus Messungenauigkeiten resultieren können. Vorzugsweise beträgt die Bewegungsfreiheitsgrad-Toleranz mehr als 0% bis 20%, besonders bevorzugt 3% bis 5% eines Bewegungsfreiheitsgrad-Maximalwerts. So kann beispielsweise die Bewegungsfreiheitsgrad-Toleranz 5 % einer maximal erreichbaren Verzögerung des Fahrzeugs sein. Das heißt, dass beispielsweise ein Bewegungsfreiheitsgrad-Istwert, dessen Wert um mehr als 5% des Bewegungsfreiheitsgrad-Maximalwerts von dem Bewegungsfreiheitsgrad-Sollwert abweicht, nicht mehr innerhalb der Bewegungsfreiheitsgrad-Toleranz liegt. Bevorzugt wird die Bewegungsfreiheitsgrad-Toleranz in Abhängigkeit des betreffenden Bewegungsfreiheitsgrads definiert. So kann die Bewegungsfreiheitsgrad-Toleranz einen vergleichsweise großen Wert aufweisen, wenn der Bewegungsfreiheitsgrad eine Längsverzögerung des Fahrzeugs ist, und eine vergleichsweise kleinen Wert aufweisen, wenn der Bewegungsfreiheitsgrad eine Querbeschleunigung und/oder Gierrate des Fahrzeugs ist.

Vorzugsweise haben die Bewegungsfreiheitgrad-Toleranz und/oder die Stellgrößen-Toleranz einen vorgegebenen Wert. Ferner bevorzugt können die die Bewegungsfreiheitgrad-Toleranz und/oder die Stellgrößen-Toleranz auch gelernte Toleranzen und/oder dynamische Toleranzen sein. Eine Toleranz mit vorgegebenem Wert kann beispielsweise aus einer Spezifikation von Fahrzeugkomponenten, insbesondere Sensoren zum Erfassen des Stellgrößen-Istwerts und/oder des Bewegungsfreiheitsgrad-Istwerts, ermittelt werden. So kann beispielsweise eine Druckmessdose eine Auflösung und eine Latenz, mit der das gemessene Signal an deren Schnittstelle zur Verfügung gestellt wird, aufweisend. Diese Latenz kann zum Definieren der Stellgrößen-Toleranz verwendet werden. Eine gelernte Toleranz kann beispielsweise aus Vergleichswerten vorhergehender vergleichbarer Fahrsituationen (im Wesentlichen gleiche Beladung des Fahrzeugs, gleiche Wetterbedingungen und/oder gleiches Gefälle der Fahrbahn) und/oder aus Vergleichswerten, die in Fahrversuchen ermittelt werden, gelernt sein. Wenn beispielsweise eine Fahrzeugverzögerung bei einem Bremsdruck von 8 bar in vergangenen Fahrsituationen zu Verzögerungen von 7,9 m/s² bis 8,1 m/s² geführt hat, dann kann aus diesen historischen Fahrdaten eine Bewegungsfreiheitsgrad-Toleranz von 0,2 m/s² gelernt werden.

Das Ermitteln des aktualisierten Bewegungsfreiheitsgrad-Maximalwerts des Fahrzeugs basierend auf der ermittelten Leistungsdiskrepanz kann Rückschlüsse auf das Fahrzeug erlauben. So kann bei Vorliegen einer Leistungsdiskrepanz des Bremssystems oder einer oder mehrerer Bremsen des Fahrzeugs eine maximal erreichbare Fahrzeugverzögerung ermittelt werden. Wenn beispielsweise im Normalfall ohne Leistungsdiskrepanz eine Bremsleistung von 400 kW mittels des Bremssystems bereitstellbar ist, jedoch eine relative Leistungsdiskrepanz von 50% ermittelt wurde, dann kann als aktualisierter Bewegungsfreiheitsgrad-Maximalwert anstelle einer ungestörten maximalen Fahrzeugverzögerung von 10 m/s² eine aktualisierte maximale Fahrzeugverzögerung von nur mehr 5 m/s² ermittelt werden.

In einer ersten bevorzugten Ausführungsform des Verfahrens erfolgt das Ermitteln der Leistungsdiskrepanz des Fahrzeugaktuators nur, falls der Bewegungsfreiheitsgrad-Istwert für zumindest eine Diskrepanzzeit außerhalb einer Bewegungsfreiheitsgrad-Toleranz um den Bewegungsfreiheitsgrad-Sollwert liegt, oder falls der zum Erreichen des Bewegungsfreiheitsgrad-Sollwert benötigte Stellgrößen-Istwert für zumindest die Diskrepanzzeit außerhalb einer Stellgrößen-Toleranz um den Stellgrößen-Erwartungswert liegt. Vorzugsweise hat die Diskrepanzzeit einen Wert von 0,5 s oder mehr, bevorzugt 1 s oder mehr, bevorzugt 1,5 s oder mehr, besonders bevorzugt 2 s. Gemäß der bevorzugten Weiterbildung wird eine Leistungsdiskrepanz und/oder der aktualisierte Bewegungsfreiheitsgrad-Maximalwert nur dann ermittelt, wenn die Soll-Ist-Abweichung des Bewegungsfreiheitsgrades oder die Soll-Ist-Abweichung der Stellgröße für zumindest die Diskrepanzzeit von der zugehörigen Toleranz abweicht. So kann sichergestellt werden, das nicht bereits kleinste Abweichungen, die beispielsweise aus Messungenauigkeiten resultieren können, bereits zu einem Ermitteln der Leistungsdiskrepanz führen. Eine Robustheit des Verfahrens gegenüber Fehlermittlungen wird verbessert. Vorzugsweise wird das Ermitteln der Leistungsdiskrepanz kontinuierlich durchgeführt, das Ermitteln eines aktualisierten Bewegungsfreiheitsgrads aber nur dann, wenn der Bewegungsfreiheitsgrad-Istwert für zumindest die Diskrepanzzeit außerhalb der Bewegungsfreiheitsgrad-Toleranz liegt und/oder wenn der Stellgrößen-Istwert für zumindest die Diskrepanzzeit außerhalb der Stellgrößen-Toleranz liegt.

Vorzugsweise umfasst das Ermitteln eines Bewegungsfreiheitsgrad-Sollwerts: Ermitteln einer geplanten Trajektorie für das Fahrzeug, durch eine autonome Einheit; und Ermitteln des Bewegungsfreiheitsgrad-Sollwerts aus der Trajektorie. Die Trajektorie umfasst zumindest einen geplanten Fahrpfad (Soll-Fahrpfad), der von dem Fahrzeug zum Erfüllen einer Fahraufgabe zu befahren ist. Ferner umfasst die Trajektorie eine fahrdynamische Vorgabe. Diese fahrdynamische Vorgabe ist oder umfasst vorzugsweise eine zum Befahren des Fahrpfads vorgegebene Geschwindigkeit oder einen zum Befahren des Fahrpfads vorgegebenen Geschwindigkeitsverlauf. So kann beispielsweise aus einer Ist-Geschwindigkeit des Fahrzeugs und einer von der Trajektorie umfassten vorgegebenen Geschwindigkeit eine Soll-Verzögerung des Fahrzeugs ermittelt werden, die notwendig ist, um das Fahrzeug von der Ist-Geschwindigkeit auf die vorgegebene Geschwindigkeit zu verzögern. Die autonome Einheit kann eine vollautonome oder teilautonome Einheit des Fahrzeugs sein. Eine autonome Einheit ist vorzugsweise ein virtueller Fahrer des Fahrzeugs, der zum autonomen Steuern des Fahrzeugs ausgebildet ist. Die autonome Einheit kann aber auch eine Einheit, insbesondere Steuereinheit, eines Fahrerassistenzsystems, insbesondere einer automatischen Distanzregelung, sein. Alternativ oder ergänzend umfasst das Erhalten eines Bewegungsfreiheitsgrad-Sollwerts: Ermitteln eines Stellwegs einer Betätigungseinrichtung; und Ermitteln des Bewegungsfreiheitsgrad-Sollwerts basierend auf dem ermittelten Stellweg. So kann beispielsweise ein Stellweg einer als Bremspedal ausgebildeten Betätigungseinrichtung ermittelt und dieser Stellweg unter Verwendung einer bekannten Pedalkennlinie in eine Soll-Verzögerung umgerechnet werden.

In einer bevorzugten Weiterbildung umfasst das Verfahren ferner den Schritt: Ermitteln eines Fahrdynamikgrenzwerts für das Fahrzeug unter Verwendung der ermittelten Leistungsdiskrepanz, falls eine Leistungsdiskrepanz des Fahrzeugaktuators ermittelt wird. Ein Einhalten des Fahrdynamikgrenzwerts gewährleistet im Regelbetrieb eine sichere und stabile Fahrt des Fahrzeugs. Vorzugsweise ist oder umfasst der Fahrdynamikgrenzwert eine maximal zulässige Fahrzeuggeschwindigkeit, eine maximal zulässige Querbeschleunigung, eine maximal zulässige Fahrzeugbeschleunigung, eine maximal zulässige Fahrzeugverzögerung, einen maximal zulässiger Lenkwinkelgradient, eine maximal zulässige Lenkfrequenz oder einen minimal zulässigen Kurvenradius des Fahrzeugs. Mittels des erfindungsgemäßen Verfahrens können auch mehrere Fahrdynamikgrenzwerte für das Fahrzeug definiert werden, sodass beispielsweise als ein erster Fahrdynamikgrenzwert eine maximal zulässige Fahrzeuggeschwindigkeit und als ein zweiter Fahrdynamikgrenzwert eine maximal zulässige Querbeschleunigung definiert wird. Wird beispielsweise eine Leistungsdiskrepanz einer Betriebsbremse ermittelt, so kann die von dieser Betriebsbremse bereitstellbare Bremsleistung gegenüber einer Bremsleistung im Regelfall vermindert sein. Das Fahrzeug ist dann nicht mit der vollen Leistung verzögerbar, was durch Setzen eines Fahrdynamikgrenzwerts berücksichtigt werden kann. So kann beispielsweise eine von einem Fahrer maximal anforderbare Fahrzeugverzögerung des Fahrzeugs durch einen Fahrdynamikgrenzwert begrenzt werden. Ein Fahrer kann diese Begrenzung in der Planung eines Bremsbeginns und/oder bei einer Abschätzung des Bremsweges berücksichtigen. Analog kann beispielsweise auch eine anforderbare Lenkwinkelgeschwindigkeit begrenzt werden.

Bevorzugt weist das Verfahren ferner auf: Neuermitteln der geplanten Trajektorie unter Verwendung des ermittelten Fahrdynamikgrenzwerts. Das Neuermitteln der geplanten Trajektorie kann ein vollständiges Neuermitteln der geplanten Trajektorie, ein teilweises Neuermitteln der geplanten Trajektorie und/oder ein Aktualisieren der geplanten Trajektorie sein. Ein teilweises Neuermitteln liegt beispielsweise dann vor, wenn eine von der geplanten Trajektorie umfasste Bahnkurve bzw. ein von der Trajektorie umfasster Pfad beibehalten wird und zugleich ein zum Befahren der Bahnkurve korrespondierendes Geschwindigkeitsprofil, das von der geplanten Trajektorie umfasst ist, neu ermittelt wird.

Beim teilweisen Neuermitteln werden vorzugsweise alle der Trajektorienplanung zugrundeliegenden Informationen und/oder Daten erneut ermittelt. Beim Aktualisieren werden vorzugsweise nur einige der Trajektorienplanung zugrundeliegenden Informationen und/oder Daten erneut ermittelt. Der ermittelte Fahrdynamikgrenzwert wird so in der Trajektorie berücksichtigt, wodurch eine Sicherheit beim Nutzen des Fahrzeugs erhöht werden kann.

In einer bevorzugten Ausgestaltung erfolgt das Ermitteln eines Stellgrößen-Erwartungswerts des Fahrzeugaktuators zum Erreichen des Bewegungsfreiheitsgrad-Sollwerts unter Verwendung gelernter Stellgrößen-Istwerte für gelernte Bewegungsfreiheitsgrad-Sollwerte, die in einem Bewegungsfreiheitsgrad-Toleranzband um den Bewegungsfreiheitsgrad-Sollwert liegen. Der Stellgrößen-Erwartungswert ist eine Prognose der Stellgröße, die zum Erreichen des Bewegungsfreiheitsgrad-Sollwerts vorgegeben werden muss. Diese Prognose kann besonders einfach unter Verwendung gelernter Stellgrößen-Istwerte durchgeführt werden, die für vergleichbare Bewegungsfreiheitsgrad-Sollwerte vorgegeben wurden. Vergleichbare Bewegungsfreiheitsgrad-Sollwerte sind gelernte Bewegungsfreiheitsgrad-Sollwerte, deren Wert in einem Bewegungsfreiheitsgrad-Toleranzband liegt, das eine Breite von maximal 10%, bevorzugt maximal 5 %, bevorzugt maximal 3%, bevorzugt maximal 2 %, besonders bevorzugt maximal 1,5 %, um den Wert des korrespondierenden Bewegungsfreiheitsgrad-Sollwerts hat. Beispielsweise kann ein Erwartungswert für einen Bremsdruck (Stellgröße), der zum Erreichen einer Verzögerung des Fahrzeugs um 2 m/s² ausgesteuert werden muss, basierend auf gelernten Bremsdrücken ermittelt werden, die zu einer Verzögerung des Fahrzeugs in einem Bereich von 1,8 m/s² bis 2,2 m/s² geführt haben. Alternativ oder ergänzend wird der erforderliche Bremsdruck, der für eine Soll-Verzögerung erforderlich ist, vorzugsweise aus Parametern eines elektronischen Bremssystems des Fahrzeugs ermittelt, wenn der Bewegungsfreiheitsgrad eine Verzögerung ist oder umfasst.

Vorzugsweise umfasst das Ermitteln eines Stellgrößen-Erwartungswerts des Fahrzeugaktuators zum Erreichen des Bewegungsfreiheitsgrad-Sollwerts: Ermitteln von Umgebungsdaten des Fahrzeugs, und Ermitteln des Stellgrößen-Erwartungswerts unter Verwendung der Umgebungsdaten. Durch Verwenden von Umgebungsdaten kann eine Genauigkeit des ermittelten Stellgrößen-Erwartungswerts verbessert werden. So kann eine Diskrepanz zwischen Bewegungsfreiheitsgrad-Sollwert und Bewegungsfreiheitsgrad-Istwert vollständig oder teilweise auf Einflussfaktoren beruhen, die unabhängig von dem Fahrzeugaktuator sind. So kann beispielsweise eine beim Bremsen des Fahrzeugs erreichte Verzögerung dann geringer sein als eine erwartete Soll-Verzögerung, wenn das Fahrzeug auf einer eisglatten Fahrbahn fährt. Durch das Verwenden von Umgebungsdaten kann diesem Umstand Rechnung getragen werden, beispielsweise indem der Bewegungsfreiheitsgrad-Sollwert reduziert wird. Die Umgebungsdaten sind oder umfassen vorzugsweise Witterungsdaten, können aber auch andere Umgebungsdaten, beispielsweise Daten zur Qualität eines Fahrbahnbelags sein oder umfassen.

In einer bevorzugten Ausgestaltung umfasst das Ermitteln eines Stellgrößen-Erwartungswerts des Fahrzeugaktuators zum Erreichen des Bewegungsfreiheitsgrad-Sollwerts: Ermitteln von Fahrzeugdaten einer gegenwärtigen Fahrzeugkonfiguration des Fahrzeugs, und Ermitteln des Stellgrößen-Erwartungswerts unter Verwendung der Fahrzeugdaten. Die gegenwärtige Fahrzeugkonfiguration betrifft sowohl fahrzeugspezifische Aspekte als auch ladungsspezifische Aspekte. Die gegenwärtige Fahrzeugkonfiguration umfasst neben den geometrischen Charakteristika des Fahrzeugs ferner auch Lastcharakteristika. Die Lastcharakteristika repräsentieren auf das Fahrzeug wirkende Lasten, die beispielsweise aus dem Eigengewicht des Fahrzeugs und aus einer Ladung des Fahrzeugs resultieren können. So ist eine gegenwärtige Fahrzeugkonfiguration eines unbeladenen Fahrzeugs verschieden von einer gegenwärtigen Fahrzeugkonfiguration desselben Fahrzeugs im beladenen Zustand. Eine Lastcharakteristik kann vorzugsweise eine Radlast, eine Achslast, eine Fahrzeuggesamtmasse, eine Masse eines Fahrzeugteils und/oder eine Schwerpunktlage des Fahrzeugs oder eines Fahrzeugteils sein oder umfassen. Ferner bevorzugt können die Lastcharakteristika auch Daten umfassen, die eine Radlast, eine Achslast, eine Fahrzeuggesamtmasse und/oder eine Masse eines Fahrzeugteils repräsentieren. Die gegenwärtige Fahrzeugkonfiguration hat einen großen Einfluss auf das Bewegungsverhalten des Fahrzeugs (bzw. auf dessen Bewegungsfreiheitsgrade), sodass eine Genauigkeit des ermittelten Stellgrößen-Erwartungswerts verbessert werden kann, wenn die Fahrzeugdaten der gegenwärtigen Fahrzeugkonfiguration berücksichtigt werden. Es soll jedoch verstanden werden, dass das Verwenden der Fahrzeugdaten beim Ermitteln des Stellgrößen-Erwartungswerts nicht erfindungswesentlich ist.

In einer bevorzugten Weiterbildung umfasst das Ermitteln des Stellgrößen-Erwartungswerts unter Verwendung der Fahrzeugdaten: Prädizieren eines dynamischen Verhaltens des Fahrzeugs unter Verwendung der Fahrzeugdaten; und Ermitteln des Stellgrößen-Erwartungswerts basierend auf dem prädizierten dynamischen Verhalten des Fahrzeugs. Das Prädizieren der dynamischen Eigenschaften der gegenwärtigen Fahrzeugkonfiguration erfolgt vorzugsweise modellbasiert. So ist ein Verhalten des Fahrzeugs vorhersagbar. In einer bevorzugten Ausgestaltung ist ein zum Prädizieren des dynamischen Verhaltens des Fahrzeugs verwendetes Fahrzeugmodell ein Einspurmodell des Fahrzeugs.

Vorzugsweise ist oder umfasst der Bewegungsfreiheitsgrad eine Längsbeschleunigung des Fahrzeugs, eine Längsverzögerung des Fahrzeugs, eine maximale Krümmung eines Pfades, welche das Fahrzeug maximal befahren kann, eine Lenkwinkelgeschwindigkeit des Fahrzeugs, ein Lenkwinkel des Fahrzeugs, ein Bremsweg des Fahrzeugs oder eine Giergeschwindigkeit des Fahrzeugs. Bevorzugt kann der Bewegungsfreiheitsgrad auch eine Gierrate und/oder eine Giergeschwindigkeit sein oder umfassen.

Bevorzugt ist oder umfasst der Fahrzeugaktuator eine aktive Lenkung, ein Bremssystem, eine Parkbremse, eine Dauerbremse, eine Betriebsbreme, einen Radsperrmechanismus, eine Zusatzlenkung, einen Verbrennungsmotor und/oder einen Elektromotor des Fahrzeugs. Es kann aber auch vorgesehen sein, dass das Verfahren für mehrere Fahrzeugaktuatoren des Fahrzeugs, beispielsweise simultan für eine Betriebsbremse und eine aktive Lenkung, durchgeführt wird.

Gemäß einer bevorzugten Ausführungsform erfolgt das Ermitteln der Leistungsdiskrepanz vollständig oder zumindest teilweise durch ein Bremssystem des Fahrzeugs. Insbesondere ist dies vorteilhaft, wenn der Fahrzeugaktuator ein Bremssystem oder eine Bremse des Fahrzeugs ist. Es kann aber auch vorgesehen sein, dass das Bremssystem eine Leistungsdiskrepanz eines Fahrzeugaktuators ermittelt, der nicht dem Bremssystem zugeordnet ist, wie beispielsweise einer Lenkung. Vorzugsweise erfolgt das Ermitteln der Leistungsdiskrepanz vollständig oder teilweise durch eine Bremssteuereinheit des Bremssystems.

Bevorzugt umfasst das Verfahren ferner: Bereitstellen eines Warnsignals, falls eine Leistungsdiskrepanz des Fahrzeugaktuators ermittelt wird. Das Warnsignal wird vorzugsweise mittels einer Mensch-Maschine-Schnittstelle bereitgestellt. Das Warnsignal ist vorzugsweise ein optisches, akustisches, haptisches und/oder elektronisches Warnsignal. Ein elektronisches Warnsignal kann beispielsweise einer autonomen Einheit des Fahrzeugs, insbesondere dem virtuellen Fahrer, bereitgestellt werden. Die Mensch-Maschine-Schnittstelle ist vorzugsweis eine Warnleuchte, ein Lautsprecher und/oder ein Bildschirm.

In einer bevorzugten Ausgestaltung wird der Bewegungsfreiheitsgrad-Sollwert basierend auf fahrzeugeigenen Daten ermittelt. Fahrzeugeigene Daten sind Daten, die von einem Fahrzeugsystem oder einer Einheit des Fahrzeugs ermittelt werden, wobei ein solches Ermitteln kein Empfangen externer Daten ist. Externe Daten sind beispielsweise Daten, die mittels einer Sendeantenne an das Fahrzeug gesendet und von einer Antenne des Fahrzeugs empfangen werden. Durch das Verwenden fahrzeugeigener Daten beim Ermitteln des Bewegungsfreiheitsgrad-Sollwerts, kann diese Ermitteln unabhängig von externen nicht zum Fahrzeug gehörenden Einheiten erfolgen. Vorzugsweise werden fahrzeugeigene Daten, von Fahrzeugsubsystemen des Fahrzeugs bereitgestellt. Beispielsweise können Signale einer Bremssteuereinheit des Fahrzeugs solche fahrzeugeigenen Daten sein. Fahrzeugeigene Daten betreffen vorzugsweise das Fahrzeug selbst. Fahrzeugeigene Daten sind besonders bevorzugt keine Streckendaten und/oder Kartendaten und/oder digitale Karten.

In einem zweiten Aspekt löst die Erfindung die eingangs genannte Aufgabe mit einem Aktuatorüberwachungssystem zum Überwachen einer Leistungskenngröße eines Fahrzeugaktuators, der dazu ausgebildet ist, zumindest einen Bewegungsfreiheitsgrad eines Fahrzeugs zu beeinflussen, das Aktuatorüberwachungssystem aufweisend eine Zustandssignalempfangseinheit, die zum Empfangen von Zustandssignalen, die einen Bewegungsfreiheitsgrad-Istwert des Fahrzeugs repräsentieren, mit einem Netzwerk des Fahrzeugs verbindbar ist und die zum Empfangen eines Stellgrößen-Istwerts mit dem Fahrzeugaktuator verbindbar ist, eine Bewegungsfreiheitsgrad-Sollwert-Ermittlungseinheit, die dazu ausgebildet ist, einen Bewegungsfreiheitsgrad-Sollwert für das Fahrzeug und einen Stellgrößen-Erwartungswert des Fahrzeugaktuators zum Erreichen des Bewegungsfreiheitsgrad-Sollwerts zu ermitteln, und eine Leistungsdiskrepanz-Ermittlungseinheit, die dazu ausgebildet ist, eine Leistungsdiskrepanz des Fahrzeugaktuators zu ermitteln, falls der Bewegungsfreiheitsgrad-Istwert außerhalb einer Bewegungsfreiheitsgrad-Toleranz um den Bewegungsfreiheitsgrad-Sollwert liegt und der Stellgrößen-Istwert geringer ist als der Stellgrößen-Maximalwert; der Bewegungsfreiheitsgrad-Istwert außerhalb einer Bewegungsfreiheitsgrad-Toleranz um den Bewegungsfreiheitsgrad-Sollwert liegt, der Stellgrößen-Erwartungswert dem Stellgrößen-Maximalwert entspricht und der Stellgrößen-Istwert dem Stellgrößen-Maximalwert entspricht, oder falls der Bewegungsfreiheitsgrad-Istwert dem Bewegungsfreiheitsgrad-Sollwert entspricht und der zum Erreichen des Bewegungsfreiheitsgrad-Istwerts benötigte Stellgrößen-Istwert außerhalb einer Stellgrößen-Toleranz um den Stellgrößen-Erwartungswert liegt. Ferner ist die Leistungsdiskrepanz-Ermittlungseinheit vorzugsweise dazu ausgebildet ist, basierend auf der ermittelten Leistungsdiskrepanz einen aktualisierten Bewegungsfreiheitsgrad-Maximalwerts des Fahrzeugs zu ermitteln.

Vorzugsweise sind die Zustandssignalempfangseinheit, die Bewegungs-freiheitsgrad-Sollwert-Ermittlungseinheit und/oder die Leistungsdiskrepanz-Ermittlungseinheit als Komponenten einer Steuereinheit ausgebildet. In einer bevorzugten Ausgestaltung ist die Steuereinheit des Aktuatorüberwachungssystems, eine Bremssteuereinheit eines Bremssystems des Fahrzeugs. Vorzugsweise weist das Aktuatorüberwachungssystem ferner eine Schnittstelle zum Ausgeben eines Warnsignals auf, wobei die Steuereinheit dazu ausgebildet ist, das Warnsignal mittels der Schnittstelle auszugeben, falls eine Leistungsdiskrepanz des Fahrzeugaktuators ermittelt wird. Die Schnittstelle kann zum Empfangen eines Stellgrößen-Istwerts auch mit einer Steuereinheit des Fahrzeugs verbindbar sein, die zum Steuern des Fahrzeugaktuators ausgebildet ist.

Es soll verstanden werden, dass das Aktuatorüberwachungssystem gemäß dem zweiten Aspekt der Erfindung gleiche und ähnliche Unteraspekte aufweisen können, wie sie insbesondere in den abhängigen Ansprüchen zum Verfahren gemäß dem ersten Aspekt der Erfindung niedergelegt sind. So kann beispielsweise die Leistungsdiskrepanz-Ermittlungseinheit dazu ausgebildet sein, die Leistungsdiskrepanz nur zu ermitteln, falls der Bewegungsfreiheitsgrad-Istwert für zumindest eine Diskrepanzzeit außerhalb einer Bewegungsfreiheitsgrad-Toleranz um den Bewegungsfreiheitsgrad-Sollwert liegt, oder falls der zum Erreichen des Bewegungsfreiheitsgrad-Sollwert benötigte Stellgrößen-Istwert für zumindest die Diskrepanzzeit außerhalb einer Stellgrößen-Toleranz um den Stellgrößen-Erwartungswert liegt.

Vorzugsweise löst die Erfindung die eingangs genannte Aufgabe mit einem Aktuatorüberwachungssystem, das dazu ausgebildet ist, das Verfahren gemäß dem ersten Aspekt der Erfindung auszuführen. Vorzugsweise weist das Aktuatorüberwachungssystem eine Steuereinheit auf, die zum Empfangen von Zustandssignalen, die einen Bewegungsfreiheitsgrad-Istwert des Fahrzeugs repräsentieren, mit einem Netzwerk des Fahrzeugs verbindbar ist und die zum Empfangen eines Stellgrößen-Istwerts mit dem Fahrzeugaktuator verbindbar ist, wobei die Steuereinheit dazu ausgebildet ist das Verfahren gemäß dem ersten Aspekt der Erfindung auszuführen.

In einem dritten Aspekt wird die eingangs genannte Aufgabe gelöst mit einem Fahrzeug, aufweisend einen oder mehrere Fahrzeugaktuatoren, zumindest ein Netzwerk und ein Aktuatorüberwachungssystem gemäß dem zweiten Aspekt der Erfindung. Vorzugsweise ist das Fahrzeug ein Nutzfahrzeug. Ein Nutzfahrzeug (Nfz), auch Nutzkraftwagen (Nkw), ist ein Kraftfahrzeug, das nach seiner Bauart und Einrichtung zum Transport von Personen oder Gütern bestimmt ist, oder zum Ziehen von Anhängern, aber kein Personenkraftwagen oder Kraftrad ist, sondern beispielsweise ein Omnibus, ein Lastkraftwagen, eine Zugmaschine oder ein Kranwagen. Im Rahmen der vorliegenden Offenbarung kann das Nutzfahrzeug ein einfaches Nutzfahrzeug, das häufig englisch als rigid vehicle bezeichnet wird, oder auch ein Fahrzeugzug aus einem Zugfahrzeug und einem oder mehreren Anhängerfahrzeugen sein. Ein typisches Beispiel eines Fahrzeugzugs umfasst eine Sattelzugmaschine und einen Sattelauflieger.

Vorzugsweise weist das Fahrzeug ein Bremssystem auf. Besonders bevorzugt ist das Bremssystem ein pneumatisches Bremssystem. Das Bremssystem umfasst vorzugsweise eine oder mehrere Federspeicherbremsen, ein Anhängersteuermodul und/oder eine elektronische Handbremse.

Es soll verstanden werden, dass das Fahrzeug gemäß dem dritten Aspekt der Erfindung gleiche und ähnliche Unteraspekte aufweisen können, wie sie insbesondere in den abhängigen Ansprüchen zum Verfahren gemäß dem ersten Aspekt der Erfindung niedergelegt sind.

Ausführungsformen der Erfindung werden nun nachfolgend anhand der Zeichnungen beschrieben. Diese sollen die Ausführungsformen nicht notwendigerweise maßstäblich darstellen, vielmehr sind die Zeichnungen, wenn dies zur Erläuterung dienlich ist, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in den Zeichnungen sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, den Zeichnungen und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnungen; diese zeigen in:
- Fig. 1: eine Draufsicht auf ein schematisch dargestelltes Fahrzeug;
- Fig. 2a: ein schematisches Ablaufdiagramm eines ersten Ausführungsbeispiels eines Verfahrens zum Ermitteln einer Leistungsdiskrepanz;
- Fig. 2b: ein schematisches Ablaufdiagramm eines zweiten Ausführungsbeispiels eines Verfahrens zum Ermitteln einer Leistungsdiskrepanz;
- Fig. 2c: ein schematisches Ablaufdiagramm eines dritten Ausführungsbeispiels eines Verfahrens zum Ermitteln einer Leistungsdiskrepanz;
- Fig. 3: ein detailliertes Ablaufdiagramm zu einem Ermitteln eines Bewegungsfreiheitsgrad-Sollwerts; und in
- Fig. 4: ein detailliertes Ablaufdiagramm zu einem Ermitteln eines Stellgrößen-Erwartungswerts.

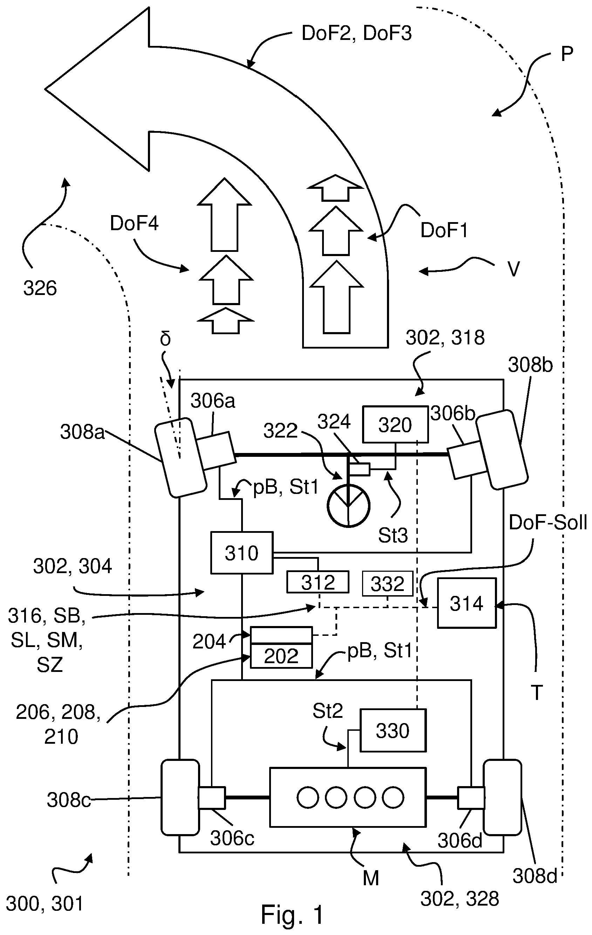

Fig. 1 zeigt ein Fahrzeug 300, das mehrere Fahrzeugaktuatoren 302 aufweist. Die Fahrzeugaktuatoren 302 sind dazu ausgebildet, das Fahrzeug 300 in dessen Längsdynamik und Querdynamik zu beeinflussen. Hierzu beeinflussen die Fahrzeugaktuatoren 302 mehrere Bewegungsfreiheitsgrade DoF des Fahrzeugs 300. Zum Verzögern des Fahrzeugs 300 umfasst ein Bremssystem 304 des Fahrzeugs 300 mehrere Bremszylinder 306, die Rädern 308 des Fahrzeugs 300 zugeordnet sind. Im vorliegenden Ausführungsbeispiel wirken die Bremszylinder 306 zum Verzögern des Fahrzeugs 300 zusammen. Das Bremssystem 304 bildet also einen ersten Fahrzeugaktuator 302. Es kann aber auch vorgesehen sein, das einzelne Bremszylinder 306 für sich genommen und/oder in Untergruppen einen Fahrzeugaktuator 302 bilden.

Um eine Längsverzögerung DoF1 des Fahrzeugs 300, die ein erster Bewegungsfreiheitsgrad DoF des Fahrzeugs 300 ist, zu erreichen, stellt ein Bremsmodulator 310 des Bremssystems 304 einen Bremsdruck pB an den Bremszylindern 306 bereit. Daraufhin spannen die Bremszylinder 306 zu und steuern so an den Rädern 308 des Fahrzeugs 300 einen Bremsschlupf aus, der die Längsverzögerung DoF1 bewirkt. Die Längsverzögerung DoF1 ist in Fig. 1 anhand von Pfeilen illustriert, deren Länge sich reduziert. Die Höhe des von dem Bremsmodulator 310 des Bremssystems 304 für die verschiedenen Bremszylinder 306 ausgesteuerten Bremsdrucks pB, wird durch eine Bremssteuereinheit 312 des Bremssystems 304 bestimmt, die den Bremsmodulator 310 ansteuert. So kann die Bremssteuereinheit 312 den Bremsmodulator 310 beispielsweise so ansteuern, dass dieser an Vorderrädern 308a, 308b des Fahrzeugs 300 zugeordneten Bremszylindern 306a, 306b einen höheren Bremsdruck pB aussteuert als an Bremszylindern 306c, 306d, die Hinterrädern 308c, 308d des Fahrzeugs 300 zugeordnet sind. Es kann aber auch vorgesehen sein, dass der Bremsdruck pB radindividuell oder für alle Räder 308 identisch ausgesteuert wird. Der Bremsdruck pB bzw. die Bremsdrücke pB sind dabei Stellgrößen St des durch das Bremssystem 304 gebildeten Fahrzeugaktautors 302.

Die Bremssteuereinheit 312 des Bremssystems 304 ist mit einer autonomen Einheit 314 des Fahrzeugs 300 verbunden, die auch als virtueller Fahrer 314 bezeichnet werden kann. Der virtuelle Fahrer 314 ist zum autonomen Steuern des Fahrzeugs 300 vorgesehen, sodass das Fahrzeug 300 ohne menschlichen Fahrer betrieben werden kann. Der virtuelle Fahrer 314 ist dazu ausgebildet, eine Trajektorie T für das Fahrzeug 300 zu planen, die einen geplanten Pfad P für das Fahrzeug 300 sowie ein zu dem Pfad P korrespondierendes Geschwindigkeitsprofil umfasst. Das Geschwindigkeitsprofil definiert für jeden Punkt auf dem Pfad P eine zugehörige Geschwindigkeit. Es kann aber auch vorgesehen sein, dass das Geschwindigkeitsprofil nur für zueinander beabstandete Punkte des Pfads P jeweils eine zugehörige Geschwindigkeit definiert.

Die Bremssteuereinheit 312 des Bremssystems 304 und der virtuelle Fahrer 314 sind über ein Fahrzeugnetzwerk 316 verbunden, das hier ein CAN-Bussystem des Fahrzeugs 300 ist. Der virtuelle Fahrer 314 ist zum Planen der Trajektorie T und zum Durchführen einer Positionssteuerung des Fahrzeugs 300 ausgebildet. Im gezeigten Ausführungsbeispiel ist der virtuelle Fahrer 314 also auch eine Positionssteuereinheit des Fahrzeugs 300. Es kann aber in anderen Ausführungsformen auch vorgesehen sein, dass die Positionssteuereinheit eine von dem zur Planung der Trajektorie T vorgesehenen virtuellen Fahrer 314 verschiedene Einheit ist. Während sich das Fahrzeug 300 entlang des Pfads P bewegt, steuert der virtuelle Fahrer 314 das Bremssystem 304 an, um das Fahrzeug 300 möglichst mit der dem Geschwindigkeitsprofil entsprechenden Geschwindigkeit V entlang des Pfads P zu führen. Hierfür stellt der virtuelle Fahrer 314 Bremssteuersignale SB auf dem Fahrzeugnetzwerk 316 bereit, die dann von der Bremssteuereinheit 312 empfangen werden. Die Bremssteuereinheit 312 steuert daraufhin den Bremsmodulator 310 bzw. die Bremszylinder 306 entsprechend den Bremssteuersignalen SB an.

Als weiteren Fahrzeugaktuator 302 weist das Fahrzeug 300 eine elektronisch steuerbare Lenkung 318 auf. Durch die Lenkung 318 kann eine Querbeschleunigung DoF2 und/oder eine Gierrate DoF3 des Fahrzeugs 300 beeinflusst werden. Die Querbeschleunigung DoF2 und die Gierrate DoG3 bilden weitere Bewegungsfreiheitsgrade DoF des Fahrzeugs 300. Die Querbeschleunigung DoF2 und die Gierrate DoF3 sind in Fig. 1 mittels eines eine Kurvenfahrt des Fahrzeugs 300 illustrierenden Pfeils verdeutlicht.

Die elektronisch steuerbare Lenkung 318 weist eine Lenksteuereinheit 320 auf, die über das Fahrzeugnetzwerk 316 mit dem virtuellen Fahrer 314 verbunden ist. Der als Positionssteuereinheit wirkende virtuelle Fahrer 314 stellt über das Fahrzeugnetzwerk 316 Lenksteuersignale SL an der Lenksteuereinheit 320 bereit, um das Fahrzeug 300 entlang des Pfads P zu führen. Die Lenksteuereinheit 320 empfängt die Lenksteuersingale SL und ermittelt daraus eine korrespondierende Stellgröße St für einen mit einer Lenkwelle 322 verbundenen Stellmotor 324 der elektronisch steuerbaren Lenkung 318. Die Stellgröße St ist hier ein Stellstrom St3 des Stellmotors 324. Der Stellmotor 324 wirkt bei Bereitstellung des Stellstroms St3 eine Drehung der Lenkwelle 322, was wiederrum dazu führt, dass an den Vorderrädern 308a, 308b ein Lenkwinkel δ ausgesteuert wird. Aufgrund von Reibung zwischen den Vorderrädern 308a, 308b und einer vom Fahrzeug 300 befahrenen Fahrbahn 326 bauen die mit dem Lenkwinkel δ angestellten Vorderräder 308a, 308b Seitenführungskräfte auf, die eine Drehung des Fahrzeugs 300 bewirken. Die Querbeschleunigung DoF2 und die Gierrate DoF3 korrespondieren zu dieser Drehung und der Geschwindigkeit V des Fahrzeugs 300.

Das Fahrzeug 300 umfasst ferner einen Motor 328, der die Hinterräder 308c, 308d des Fahrzeugs 300 antreibt. Durch ein vom Motor 328 an den Hinterrädern 308c, 308d bereitgestelltes Antriebsmoment M kann eine Längsbeschleunigung DoF4 des Fahrzeugs 300 bewirkt werden. Analog zur Längsverzögerung DoF1 ist auch die Längsbeschleunigung DoF4 in Fig. 1 mittels in ihrer Länge verändernden Pfeilen illustriert, wobei sich die Länge der Pfeile bei der Längsbeschleunigung DoF4 erhöht, wodurch eine zunehmende Geschwindigkeit V des Fahrzeugs 300 verdeutlichen soll. Ein Motorsteuergerät 330 des Motors 328 ist ebenfalls über das Fahrzeugnetzwerk 316 mit dem virtuellen Fahrer 314 verbunden. Zum Beschleunigen des Fahrzeugs 300 stellt der virtuelle Fahrer 314 Motorsteuersignale SM auf dem Fahrzeugnetzwerk 316 bereit, die dann von dem Motorsteuergerät 330 empfangen werden. Das Motorsteuergerät 330 stellt eine zu den Motorsteuersignalen SM korrespondierende Stellgröße St bereit, die beispielsweise eine Einspritzmenge St2 von in Zylinder des Motors 328 eingespritztem Kraftstoff ist.

Während das Fahrzeug 300 auf dem Pfad P fährt, wählt der virtuelle Fahrer 314 in seiner Funktion als Positionssteuereinheit die Motorsteuersignale SM wenn möglich immer so, dass das Antriebsmoment M einer gewünschten Längsbeschleunigung DoF4 des Fahrzeugs 300 entspricht. Analog versucht der virtuelle Fahrer 314 mittels der Lenksignale SL, die über das Fahrzeugnetzwerk 314 an der elektronisch steuerbaren Lenkung 318 bereitgestellt werden, das Fahrzeug 300 auf dem Pfad P zu halten. Hierfür stellt die Lenkung 318, sofern dies möglich ist, die vom virtuellen Fahrer 314 gewünschte Querbeschleunigung DoF2 und/oder die gewünschte Gierrate DoF4 des Fahrzeugs 300 ein. In analoger Weise, wählt der virtuelle Fahrer 314 in seiner Funktion als Positionssteuereinheit die Bremssteuersignale SB möglichst so, dass eine der Trajektorie T entsprechende Längsverzögerung DoF1 des Fahrzeugs 300 erreicht wird. Noch bevor oder unmittelbar während das Fahrzeug 300 eine Bewegung ausführt, liegen am virtuellen Fahrer 314 vorab geplante Sollwert für die Bewegungsfreiheitsgrade DoF (Bewegungsfreiheitsgrad-Sollwerte DoF-Soll) Längsverzögerung DoF1, Querbeschleunigung DoF2, Gierrate DoF3 und Längsbeschleunigung DoF4 vor. Diese werden vom virtuellen Fahrer 314 im Rahmen einer Planung der Trajektorie T ermittelt. Im vorliegenden Ausführungsbeispiel weist ein Längsverzögerungs-Sollwert DoF1-Soll einen Wert von 8 m/s² auf.

Es soll jedoch verstanden werden, dass am virtuellen Fahrer 314 oder an einer teilautonomen Einheit des Fahrzeugs 300 auch weniger, mehr und/oder andere Bewegungsfreiheitsgrad-Sollwerte DoF-Soll vorliegen können. Im Falle einer vollständigen oder teilweise manuellen Steuerung des Fahrzeugs 300 durch einen menschlichen Fahrer kann der vom Fahrer angeforderte bzw. gewünschte Bewegungsfreiheitsgrad-Sollwert DoF-Soll auch aus einem Stellweg eines Betätigungselements ermittelt werden. So kann beispielsweise ein Längsverzögerungs-Sollwert DoF1-Soll aus einem Stellweg eines Bremspedals des Fahrzeugs 300 und einer korrespondierenden Pedalkennlinie ermittelt werden.

Der virtuelle Fahrer 314 fordert mittels der Bremssteuersignale SB, Lenksteuersignale SL und Motorsteuersignale SM, die dieser auf dem Fahrzeugnetzwerk 316 bereitstellt, von dem Bremssystem 304, der Lenkung 318 und dem Motor 328 Fahrdynamikeingriffe an, die zu den Bewegungsfreiheitsgrad-Sollwerten DoF-Soll führen. So empfängt gemäß dem vorliegenden Ausführungsbeispiel die Bremssteuereinheit 312 des Bremssystems 304 als Bremssteuersignal SB den Längsverzögerungs-Sollwert DoF1-Soll von 8 m/s². Daraus ermittelt die Bremssteuereinheit 312 einen Bremsdruck-Erwartungswert St1-EW, der hier ein Stellgrößen-Erwartungswert St-EW für die Stellgröße Bremsdruck pB des Bremssystems 304 ist. Der Bremsdruck-Erwartungswert St1-EW ist derjenige Bremsdruck pB, der gemäß einer Vorhersage der Bremssteuereinheit 312 zum Erreichen des Längsverzögerungs-Sollwerts DoF1-Soll von 8 m/s² benötigt wird. Das Ermitteln des Bremsdruck-Erwartungswerts St1-EW erfolgt im vorliegenden Ausführungsbeispiel kennfeldbasiert. Dabei ermittelt die Bremssteuereinheit 312 einen zum Längsverzögerungs-Sollwerts DoF1-Soll von 8 m/s² korrespondierenden Bremsdruck-Erwartungswert St1-EW von 8 bar.

Im optimalen Fall entspricht ein reales Fahrzeugverhalten des Fahrzeugs 300 (ein Ist-Fahrzeugverhalten) einem gewünschten Soll-Fahrzeugverhalten, wobei ein Aussteuern eines Stellgrößen-Erwartungswerts St-EW als Stellgrößen-Istwert St-Ist eines Fahrzeugaktuators 302 zu einem Bewegungsfreiheitsgrad-Istwert DoF-Ist führt, der dem gewünschten Bewegungsfreiheitsgrad-Sollwert DoF-Soll entspricht. In dem vorliegenden Ausführungsbeispiel führt also im Idealfall, das Aussteuern des Bremsdruck-Erwartungswerts St1-EW von 8 bar als Bremsdruck-Istwert St1-EW zu einer Längsverzögerung des Fahrzeugs 300 von 8 m/s² (Längsverzögerungs-Istwert DoF1-Ist = 8 m/s²). Im Idealfall verhält sich das Fahrzeug 300 also so, wie es der virtuelle Fahrer 314 und die Bremssteuereinheit 312 erwarten. Aus verschiedenen Gründen kann es jedoch vorkommen, dass sich ein Bewegungsfreiheitsgrad-Istwert DoF-Ist einstellt, der nicht dem Bewegungsfreiheitsgrad-Sollwert DoF-Soll entspricht.

So kann beispielsweise eine Leistung eines zur Beeinflussung eines Bewegungsfreiheitsgrads DoF vorgesehenen Fahrzeugaktuators 302 eingeschränkt sein. In diesem Fall führt das Aussteuern des Stellgrößen-Erwartungswert St-EW als Stellgrößen-Istwert DoF-Ist nicht zum gewünschten Bewegungsfreiheitsgrad-Istwert DoF-Ist bzw. es kommt zu einer Abweichung zwischen dem Bewegungsfreiheitsgrad-Istwert DoF-Ist und dem Bewegungsfreiheitsgrad-Sollwert DoF-Soll. Im betrachteten Ausführungsbeispiel kann es also sein, dass das Aussteuern des Bremsdruck-Erwartungswerts St1-EW von 8bar als Bremsdruck-Istwert St1-Ist nicht ausreicht, um die gewünschte Längsverzögerung DoF1 des Fahrzeugs 300 von 8 m/s² einzustellen. So kann es beispielsweise aufgrund von Rost, der sich im Rahmen einer längeren Standzeit an Bremsscheiben, die zu den Bremszylindern 306 korrespondieren, gebildet hat, dazu kommen, dass ein Bremsdruck-Istwert St1-Ist von 10 bar ausgesteuert werden muss, um den Längsverzögerungs-Sollwert DoF1-Soll von 3 m/s² zu erreichen. In diesem Fall liegt also eine Leistungsdiskrepanz 3 des Fahrzeugaktuators 302 Bremssystem 304 vor. Leistungsdiskrepanz ist im vorliegenden Zusammenhang dabei nicht zwingend als physikalische Leistung der Einheit Watt zu verstehen, sondern als die Fähigkeit eine vorgesehene Aufgabe zu erfüllen.

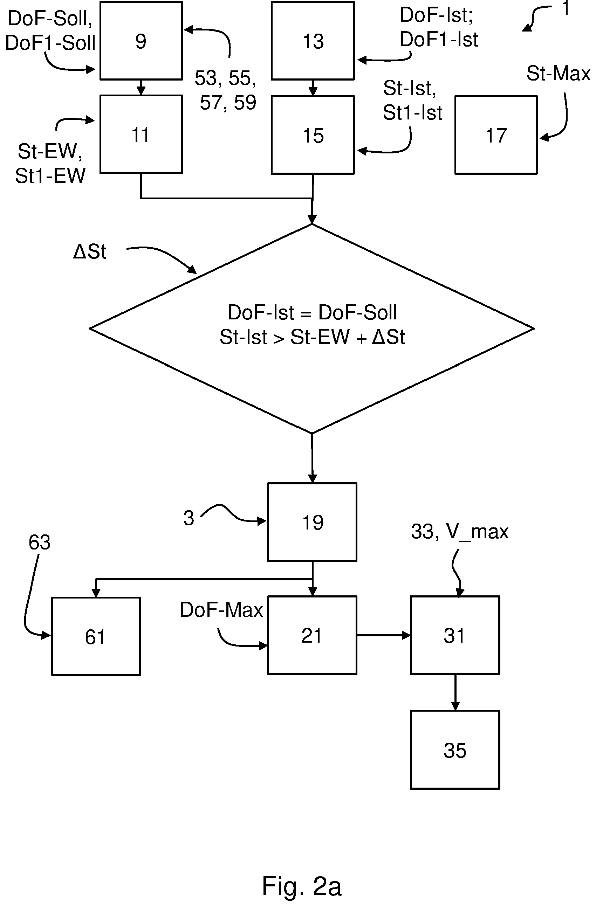

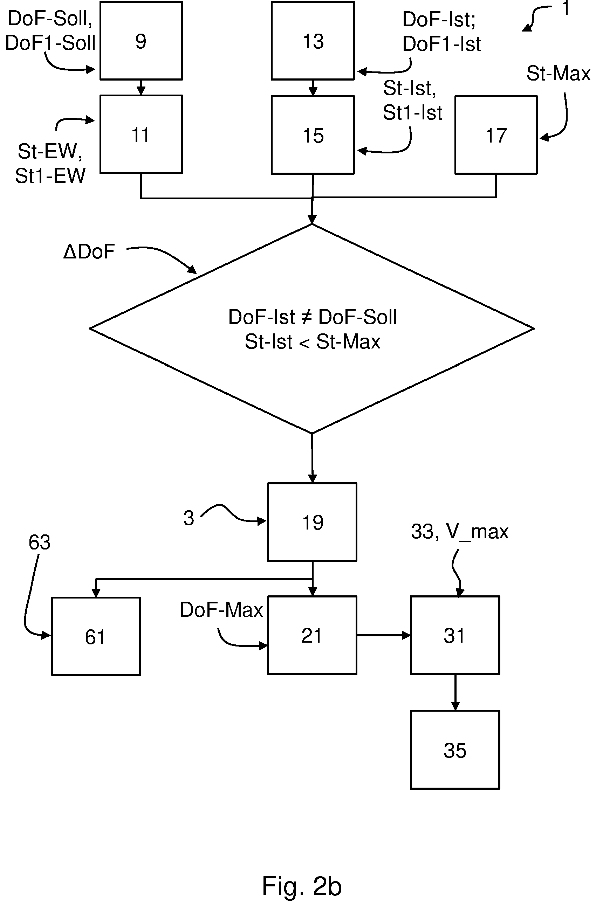

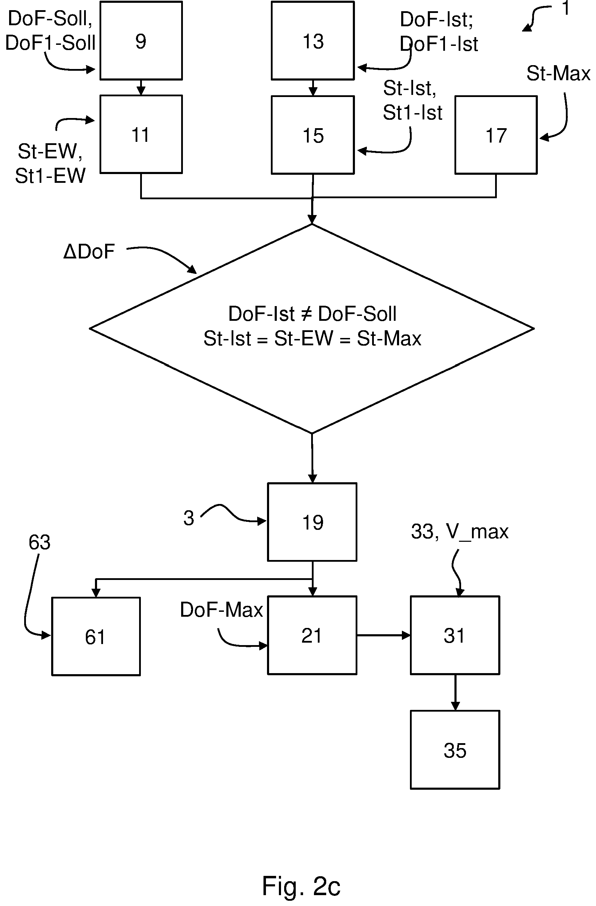

Die vorbeschriebene durch bei längerer Standzeit gebildeten Rost hervorgerufene Leistungsdiskrepanz 3 des Bremssystems 304 ist sicherheitskritisch. Falls die Leistungsdiskrepanz 3 dem menschlichen Fahrer und/oder virtuellen Fahrer 314 des Fahrzeugs 300 nicht bekannt ist, kann dies zu Unfällen führen. So kann eine reduzierte Leistung des Bremssystems 304 beispielsweise zu einem verlängerten Bremsweg des Fahrzeugs 300 führen, woraus Unfälle entstehen können. Um Leistungsdiskrepanzen 3 der Fahrzeugaktuatoren 302 zu erkennen, weist das Fahrzeug 300 ein Aktuatorüberwachungssystem 200 auf. Das Aktuatorüberwachungssystem 200 ist dazu ausgebildet, das nachstehend unter Bezug auf Fig. 2 bis 4 erläuterte Verfahren 1 zum Ermitteln einer Leistungsdiskrepanz 3 zwischen einer Soll-Leistung und einer Ist-Leistung eines Fahrzeugaktuators 302 auszuführen.

In einem ersten Schritt des Verfahrens 1 erfolgt ein Ermitteln 9 eines Bewegungsfreiheitsgrad-Sollwerts DoF-Soll. Vorstehend wurde dies bereits anhand des Ermittelns eines Längsverzögerungs-Sollwert DoF1-Soll unter Verwendung der Trajektorie T beschrieben. Im Anschluss an das Ermitteln 9 des Längsverzögerungs-Sollwerts DoF1-Soll erfolgt als zweiter Schritt des Verfahrens 1 ein Ermitteln 11 eines Stellgrößen-Erwartungswerts St-EW. Auch dies wurde vorstehend bereits als Ermitteln eines Bremsdruck-Erwartungswerts St1-EW des Bremssystems 304 erläutert. Es soll jedoch verstanden werden, das zum Erreichen eines Bewegungsfreiheitsgrad-Sollwerts DoF-Soll auch mehrere Stellgrößen-Erwartungswerte St-EW verschiedener Fahrzeugaktuatoren 302 ermittelt werden können. Als weitere Schritte umfasst das Verfahren 1 ein Ermitteln 13 eines Bewegungsfreiheitsgrad-Istwerts DoF-Ist für das Fahrzeug 200, der zum dem Bewegungsfreiheitsgrad-Sollwert DoF-Soll korrespondiert. Für das hier beschriebene Beispiel eines Längsverzögerungs-Sollwert DoF1-Soll wird also beim Ermitteln 13 ein tatsächlicher Längsverzögerungs-Istwert DoF1-Ist des Fahrzeugs 300 in einer Fahrsituation ermittelt. Bei einem Ermitteln 15 eines Stellgrößen-Istwerts St-Ist wird Ermittelt, welche Stellgröße St tatsächlich am Fahrzeugaktuator 302 bereitgestellt wurde, um den Bewegungsfreiheitsgrad-Istwert DoF-Ist auszusteuern. Im betrachteten Beispiel einer Längsverzögerung DoF1 des Fahrzeugs 300 wird also beispielsweise ermittelt, welcher Bremsdruck pB als Stellgrößen-Istwert St-Ist (bzw. St1-Ist) an den Bremszylindern 306 des Fahrzeugs 300 bereitgestellt wurde, um einen Längsverzögerungs-Istwert DoF1-Ist als Bewegungsfreiheitsgrad-Istwert DoF-Ist einzustellen.

In einem weiteren Schritt des Verfahrens 1 erfolgt ein Erhalten 17 eines Stellgrößen-Maximalwerts St-Max des Fahrzeugaktuators 208. Für das Bremssystem 304 ist der Stellgrößen-Maximalwert St-Max ein maximaler Bremsdruck, der an den Bremszylindern 306 bereitgestellt werden kann. Zur Vereinfachung wird im vorliegenden Beispiel ein identischer Bremsdruck pB an allen Bremszylindern 306 des Fahrzeugs 300 betrachtet. Es soll jedoch verstanden werden, dass auch eine Betrachtung einzelner Bremszylinder 306 erfolgen kann.

Die Schritte 9, 11, 13, 15, 17 erfolgen im vorliegenden Ausführungsbeispiel teilweise simultan. Es kann aber auch vorgesehen sein, das einzelne dieser Schritte früher oder später durchgeführt werden als andere. So kann das Ermitteln 17 eines Stellgrößen-Maximalwerts St-Max auch vor einem Ermitteln 9 des Bewegungsfreiheitsgrad-Sollwerts DoF-Soll erfolgen. Ferner kann beispielsweise der Stellgrößen-Istwert St-Ist auch kontinuierlich ermittelt werden (das Ermitteln 15 kann kontinuierlich erfolgen), sodass das Ermitteln 15 auch teilweise vor dem Ermitteln 13 des Bewegungsfreiheitsgrad-Istwerts DoF-Ist durchgeführt werden kann.

Das Ermitteln des Bewegungsfreiheitsgrad-Istwerts (DoF-Ist) erfolgt hier durch eine Zustandssignalempfangseinheit 206 des Aktuatorüberwachungssystems 200. Hierfür empfängt die Zustandssignalempfangseinheit 206 korrespondierende Zustandssignale SZ von dem Fahrzeugnetzwerk 316, wobei die den Bewegungsfreiheitsgrad-Istwert DoF-Ist repräsentierenden Zustandssignale SZ im betrachteten Ausführungsbeispiel von dem virtuellen Fahrer 314 auf dem Fahrzeugnetzwerk 316 bereitgestellt werden. Der virtuelle Fahrer 314 ermittelt den Längsverzögerungs-Istwert DoF1-Ist mittels verschiedener in Fig. 1 nicht dargestellter Sensoren. Es kann jedoch beispielsweise auch vorgesehen sein, dass der Längsverzögerungs-Istwert DoF1-Ist von einem regulären Stabilitätsregelsystem, das englisch auch als Electronic Stability Control (ESC) bezeichnet wird, ermittelt wird, wobei das ESC dann die Zustandssignale SZ auf dem Fahrzeugnetzwerk 316 bereitstellt. Ferner kann auch vorgesehen sein, dass die Zustandssignalempfangseinheit 206 den Bewegungsfreiheitsgrad-Istwert DoF-Ist unmittelbar durch Messung ermittelt. Ferner empfängt die Zustandssignalempfangseinheit 206 über das Fahrzeugnetzwerk 316 auch den Stellgrößen-Istwert St-Ist. So stellt im betrachteten Ausführungsbeispiel einer Längsverzögerung DoF1, die Bremssteuereinheit 312 den Stellgrößen-Istwert St1-EW bzw. korrespondierende Signale kontinuierlich auf dem Fahrzeugnetzwerk 316 bereit.

Eine Bewegungsfreiheitsgrad-Sollwert-Ermittlungseinheit 208 des Aktuatorüberwachungssystems 200 führt das Ermitteln 9 des Bewegungsfreiheitsgrad-Sollwerts DoF-Soll aus. Hierfür empfängt die Bewegungsfreiheitsgrad-Sollwert-Ermittlungseinheit 208 die von dem virtuellen Fahrer 314 auf dem Fahrzeugnetzwerk 316 bereitgestellte Trajektorie T und bestimmt daraus einen oder mehrere Bewegungsfreiheitsgrad-Sollwerte DoF-Soll. Es kann aber auch vorgesehen sein, dass der virtuelle Fahrer 314 teil des Aktuatorüberwachungssystems 200, insbesondere die Bewegungsfreiheitsgrad-Sollwert-Ermittlungseinheit 208, ist. Ferner ermittelt die Bewegungsfreiheitsgrad-Sollwert-Ermittlungseinheit 208 basierend auf Signalen des Fahrzeugnetzwerks 316 auch den Stellgrößen-Erwartungswert St-EW, wobei dies im betrachteten Ausführungsbeispiel durch Auswerten von Signalen der Bremssteuereinheit 312 erfolgt.

Ferner umfasst das Aktuatorüberwachungssystem 200 eine Leistungsdiskrepanz-Ermittlungseinheit 210, die die Leistungsdiskrepanz 3 des betrachteten Fahrzeugaktuators 302 ermittelt. Die Zustandssignalempfangseinheit 206, die Bewegungsfreiheitsgrad-Sollwert-Ermittlungseinheit 208 und die Leistungsdiskrepanz-Ermittlungseinheit 310 sind hier Subeinheiten einer Überwachungssteuereinheit 202 des Aktuatorüberwachungssystems 200, können aber auch als separate Einheiten ausgeführt sein. So kann beispielsweise die Bewegungsfreiheitsgrad-Sollwert-Ermittlungseinheit 208 auch durch den virtuellen Fahrer 314 gebildet sein. Ferner umfasst die Überwachungssteuereinheit 202 eine mit dem Fahrzeugnetzwerk 316 verbundene Schnittstelle 204.

An das Ermitteln 9 des Bewegungsfreiheitsgrad-Sollwerts DoF-Soll, das Ermitteln 11 des Stellgrößen-Erwartungswerts St-EW, das Ermitteln 13 des Bewegungsfreiheitsgrad-Istwerts DoF-Ist, das Ermitteln 15 des Stellgrößen-Istwerts St-Ist und das Erhalten 17 des Stellgrößen-Maximalwerts St-Max erfolgt im Verfahren 1 ein Ermitteln 19 der Leistungsdiskrepanz 3 des Fahrzeugaktuators 302, falls eine von drei nachfolgend mit Bezug zu den Figuren 2a bis 2c erläuterten Voraussetzungen erfüllt ist.

In einem ersten Fall wird eine Leistungsdiskrepanz 3 dann von der Leistungsdiskrepanz-Ermittlungseinheit 210 des Aktuatorüberwachungssystems 200 ermittelt, wenn der Bewegungsfreiheitsgrad-Istwert DoF-Ist dem Bewegungsfreiheitsgrad-Sollwert DoF-Soll entspricht, eine zum Aussteuern dieses Bewegungsfreiheitsgrad-Istwerts DoF-Ist benötigter Stellgrößen-Istwert St-Ist aber größer ist als der vorab ermittelte Stellgrößen-Erwartungswert St-EW. Im vorliegend betrachteten Ausführungsbeispiel einer Längsverzögerung DoF1 des Fahrzeugs 300 wird in diesem Fall also der Längsverzögerungs-Sollwert DoF1-Soll von 8 m/s² erreicht, hierfür muss aber ein Bremsdruck St1-Ist von 10 bar anstelle des Bremsdruck-Erwartungswert St1-EW von 8 bar an den Bremszylindern 206 des Bremssystems 304 bereitgestellt werden. In dem in Fig. 2a dargestellten ersten Fall des Ermittelns 19 der Leistungsdiskrepanz 3 wird also die gewünschte Fahrzeugbewegung erreicht, hierfür muss der Fahrzeugaktuator 304 aber stärker betätigt werden als vorhergesagt. Dies ist zum Beispiel der Fall, wenn den Bremszylindern 306 zugeordnete Bremsbeläge überhitzen. Der als Positionssteuereinheit wirkende virtuelle Fahrer 314 erkennt kleine Abweichungen zwischen Bewegungsfreiheitsgrad-Sollwert DoF-Soll und Bewegungsfreiheitsgrad-Istwert DoF-Ist und regelt die Bremssteuersignale SB bzw. unter Zuhilfenahme der Bremssteuereinheit 312 den Bremsdruck pB entsprechend nach, sodass insgesamt der Längsverzögerungs-Sollwert DoF1-Soll als Längsverzögerungs-Istwert DoF1-Ist erreicht wird.

Um Fehlermittlungen zu verhindern, erfolgt das Ermitteln 19 der Leistungsdiskrepanz 3 jedoch nur, wenn der Stellgrößen-Istwert St-Ist außerhalb einer Stellgrößen-Toleranz ΔSt um den Stellgrößen-Erwartungswert St-EW liegt. So kann verhindert werden, dass beispielsweise beim Ermitteln des Stellgrößen-Istwerts St-Ist auftretende geringfügige Messungenauigkeiten zum Ermitteln 19 einer Leistungsdiskrepanz 3 führen.

Das in Fig. 2a dargestellte Ermitteln 19 der Leistungsdiskrepanz 3 ist ein in der Praxis häufig auftretender Fall, in dem zwar das gewünschte Fahrzeugverhalten ausgesteuert werden kann, eine Leistungsfähigkeit eines oder mehrerer Fahrzeugaktuatoren 302 jedoch unerwünscht reduziert ist. Fig. 2b und Fig. 2c illustrierten hingegen Fälle, in denen das gewünschte Fahrzeugverhalten des Fahrzeugs 300 nicht ausgesteuert werden kann bzw. in denen der Bewegungsfreiheitsgrad-Istwert DoF-Ist von dem Bewegungsfreiheitsgrad-Sollwert DoF-Soll abweicht. Im betrachteten Ausführungsbeispiel ist dies beispielsweise der Fall, wenn anstelle des Längsverzögerungs-Sollwerts DoF1-Soll von 8 m/s² nur maximal ein Längsverzögerungs-Istwert DoF1-Ist von 4 m/s² erreicht wird. Diese Abweichung von Längsverzögerungs-Sollwert DoF1-Soll und Längsverzögerungs-Istwert DoF1-Ist kann unterschiedlich bedingt sein.

In einem zweiten Fall (Fig. 2b) des Ermittelns 19 der Leistungsdiskrepanz 3 weicht der Bewegungsfreiheitsgrad-Istwert DoF-Ist von dem Bewegungsfreiheitsgrad-Sollwert DoF-Soll ab und der Stellgrößen-Istwert ist kleiner als der Stellgrößen-Maximalwert St-Max. Für die betrachtete Längsverzögerung DoF1 wird also ein Wert von 4 m/s² anstelle des gewünschten Längsverzögerungs-Sollwerts DoF1-Soll von 8 m/s² erreicht und der Bremsdruck pB liegt unter dem maximalen Bremsdruck pB_max von 10 bar. Der virtuelle Fahrer 314 und auch ein menschlicher Fahrer wird, wenn das Fahrzeug 300 weniger stark verzögert wird als gewollt (DoF1-Ist ≤ DoF1-Soll) eine zusätzliche Bremsleistung am Bremssystem 304 anfordern. Dies kann jedoch aus verschiedenen Gründen nicht möglich sein, beispielsweise, wenn aufgrund von Leckagen am Bremssystem 304 nur ein Bremsdruck pB von 8 bar anstelle des konfigurationsgemäß maximalen Bremsdrucks von 10 bar aussteuerbar ist. Wenn also eine Leistungsdiskrepanz 3 des Fahrzeugaktuators 302 vorliegt, dann kann der Bewegungsfreiheitsgrad-Sollwert DoF-Soll vom Bewegungsfreiheitsgrad-Istwert DoF-Ist abweichen, sodass die Leistungsdiskrepanz 3 ermittelt werden kann. Um Messungenauigkeiten auszugleichen, erfolgt das Ermitteln 19 der Leistungsdiskrepanz im zweiten Fall nur dann, wenn der Bewegungsfreiheitsgrad-Istwert DoF-Ist um mehr als eine Bewegungsfreiheitsgrad-Toleranz ΔDoF von dem Bewegungsfreiheitgrad-Sollwert DoF-Soll abweicht.

In einem dritten Fall (vgl. Fig. 2c) erfolgt das Ermitteln 19 einer Leistungsdiskrepanz 3 dann, wenn der Bewegungsfreiheitsgrad-Istwert DoF-Ist von dem Bewegungsfreiheitsgrad-Sollwert DoF-Soll abweicht obwohl der St-Istwert St-Ist gleich dem Stellgrößen-Erwartungswert St-EW und gleich dem Stellgrößen-Maximalwert St-Max ist. Im vorliegenden Ausführungsbeispiel wird also bei einer Vollbremsung des Fahrzeugs 300 trotz aussteuern des maximalen Bremsdrucks pB von 10 bar ein Längsverzögerungs-Istwert DoF1-Ist erreicht, der geringer ist als der Längsverzögerungs-Sollwert DoF1-Soll. Dies ist beispielsweise der Fall, wenn das Bremssystem 304 des Fahrzeugs 300 aufgrund überhitzter Bremsscheiben und Bremsbeläge nicht mehr die volle Verzögerungsleistung bereitstellen kann.

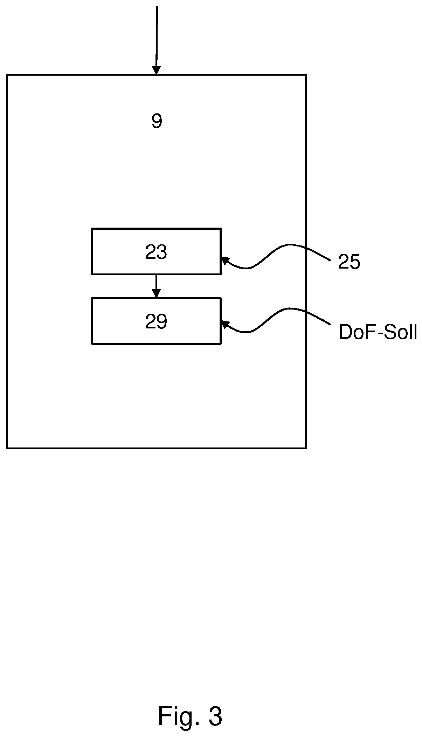

Mit Ausnahme des Ermittelns 19 bzw. der hierzu zu erfüllenden Bedingungen ist das Verfahren gemäß den Figuren 2a bis 2c identisch, sodass die nachfolgende Beschreibung analog für alle drei Fälle des Ermittelns 19 der Leistungsdiskrepanz 3 gilt. Analog sind auch das Ermitteln 9, 11, 13, 15 und das Erhalten 17 in den Verfahren 1 gemäß der Figuren 2a bis 2c im Wesentlichen identisch. Im vorliegenden Ausführungsbeispiel erfolgt das Ermitteln 9 des Bewegungsfreiheitsgrad-Sollwerts DoF-Soll basierend auf der Trajektorie T, wobei zunächst die Trajektorie T für das Fahrzeug 300 durch den virtuellen Fahrer 314 ermittelt wird (Ermitteln 23 in Fig. 3) und dann der Bewegungsfreiheitsgrad-Sollwert DoF-Soll, wie bereits beschrieben wurde, basierend auf der Trajektorie T ermittelt wird (Ermitteln 29 in Fig. 3).

Durch Betrachtung des Bewegungsfreiheitsgrad-Sollwerts DoF-Soll, des Bewegungsfreiheitsgrad-Istwerts DoF-Ist, des Stellgrößen-Erwartungswerts St-EW, des Stellgrößen-Istwerts St-Ist und des Stellgrößen-Maximalwerts St-Max kann im erfindungsgemäßen Verfahren 1 eine Leistungsdiskrepanz 3 eines Fahrzeugaktuators 304 ermittelt werden. Im Anschluss an dieses Ermitteln 19 der Leistungsdiskrepanz 3 erfolgt im Verfahren 1 ferner ein Ermitteln 21 eines aktualisierten Bewegungsfreiheitsgrad-Maximalwerts DoF-Max, basierend auf der ermittelten Leistungsdiskrepanz 3. Die Leistungsdiskrepanz 3 wird also dazu verwendet, einen Bewegungsfreiheitsgrad-Maximalwert DoF-Max des Fahrzeugs 300 zu aktualisieren. So kann beispielsweise ein Längsverzögerungs-Maximalwert DoF1-Max des Fahrzeugs 300 bei voll funktionstüchtigem Bremssystem 304 einen Wert von 10 m/s² haben. Aufgrund von Rost an den Bremszylindern 306 zugeordneten Bremsscheiben kann aber eine Leistungsdiskrepanz 3 des Bremssystems 3 vorliegen, sodass unter Umständen nur eine Längsverzögerung DoF1 des Fahrzeugs 300 von 6 m/s² erreicht werden kann. Diese aktualisierte Längsverzögerung DoF1 wird im Rahmen des Ermittelns 21 als aktualisierter Bewegungsfreiheitsgrad-Maximalwert DoF-Max gesetzt. Der aktualisierte Bewegungsfreiheitsgrad-Maximalwert DoF-Max kann dann weiter zum Steuern des Fahrzeugs 300 verwendet werden.

So umfasst das in den Figuren 2a bis 2c gezeigte Verfahren 1 ein Ermitteln 31 eines Fahrdynamikgrenzwerts 33 für das Fahrzeug 300. Der Fahrdynamikgrenzwert 33 wird basierend auf dem aktualisierten Bewegungsfreiheitsgrad-Maximalwert DoF-Max ermittelt. So kann der Fahrdynamikgrenzwert 33 im einfachsten Fall ein maximal anforderbare Längsverzögerung DoF1 des Fahrzeugs 300 sein. Hier ist der Fahrdynamikgrenzwert 33 aber eine Maximalgeschwindigkeit V_max, die vom Fahrzeug 300 nicht überschritten werden kann. So kann die Maximalgeschwindigkeit V_max des Fahrzeugs 300 beispielsweise auf einen Wert von 50 km/h limitiert sein, wenn eine Leistungsdiskrepanz 3 des Bremssystems 304 ermittelt wird. Besonders bevorzugt skaliert der Fahrdynamikgrenzwert 33 mit der ermittelten Leistungsdiskrepanz 3. So kann beispielsweise eine Maximalgeschwindigkeit V_max von 70 km/h möglich sein, wenn das Bremssystem 304 eine Längsverzögerung DoF1 des Fahrzeugs 300 von 6 m/s² bereitstellen kann, und eine Maximalgeschwindigkeit V_max von nur 30 km/h, wenn das Bremssystem 304 zum Bereitstellen einer Längsverzögerung DoF1 des Fahrzeugs 300 von 3 m/s² in der Lage ist.

Ferner weist das Verfahren 1 in den gezeigten Ausführungsbeispielen ein Neuermitteln 35 der geplanten Trajektorie T unter Verwendung des ermittelten Fahrdynamikgrenzwerts 33 auf. Hierfür stellt das Aktuatorüberwachungssystem 200 des Fahrdynamikgrenzwert 33 mittels der Schnittstelle 204 auf dem Fahrzeugnetzwerk 316 bereit. Der virtuelle Fahrer 314 empfängt den Fahrdynamikgrenzwert 33 und plant die Trajektorie T neu, wobei die Trajektorie T die ermittelte Maximalgeschwindigkeit V_max einhält. Es kann beim Neuermitteln 35 der Trajektorie T aber anstelle eines vollkommen Neuermittelns auch eine Aktualisierung der Trajektorie T erfolgen. So kann beispielsweise der Pfad P beibehalten und nur das zugehörige Geschwindigkeitsprofil angepasst werden.

Ferner umfasst das Verfahren 1 in den gezeigten Ausführungsbeispielen ein Bereitstellen 61 eines Warnsignals 63, falls eine Leistungsdiskrepanz 3 des Fahrzeugaktuators 304 ermittelt wird. Hier ist das Warnsignal 63 ein digitales Signal, das das Aktuatorüberwachungssystem 200 mittels der Schnittstelle 204 auf dem Fahrzeugnetzwerk 316 bereitstellt. Ferner umfasst das Warnsignal 63 aber auch ein optisches und akustisches Warnsignal 63 das an einer Mensch-Maschine-Schnittstelle 332 in einem in den Figuren nicht dargestellten Cockpit des Fahrzeugs 300 bereitgestellt wird. So kann ein menschlicher Passagier auf die Leistungsdiskrepanz hingewiesen werden und dieser kann gegebenenfalls die Steuerung des Fahrzeugs 300 von dem virtuellen Fahrer 314 übernehmen.

Wie die vorstehenden Erläuterungen zeigen, verwendet das Verfahren 1 vorzugsweise ausschließlich fahrzeugeigene Daten zum Ermitteln 11, 15 des Stellgrößen-Erwartungswerts St-EW und des Stellgrößen-Istwerts St-Ist. Auch der Bewegungsfreiheitsgrad-Sollwert DoF-Soll und/oder der Bewegungsfreiheitsgrad-Istwert DoF-Ist können allein basierend auf fahrzeugeigenen Daten ermittelt werden. So kann der Längsverzögerungs-Istwert DoF1-Ist beispielsweise mittels eines Beschleunigungssensors und ohne GPS-Daten ermittelt werden. Auch das Ermitteln 9 des Bewegungsfreiheitsgrad-Sollwerts DoF-Soll kann ohne externe Daten bzw. ausschließlich mit fahrzeugeigenen Daten durchgeführt werden. Der virtuelle Fahrer 314 verwendet dann vorzugsweise keine externen Kartendaten zum Ermitteln der Trajektorie T. Es kann aber auch vorgesehen sein, dass einer der Ermittlungsschritte 9, 11, 13, 15 unter Verwendung fahrzeugexterner Daten aber ohne externe Kartendaten erfolgt.

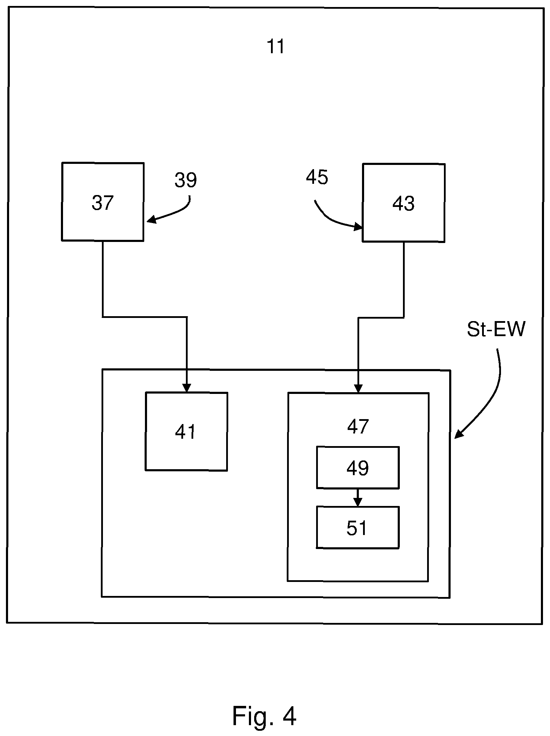

Das Ermitteln 11 des Stellgrößen-Erwartungswerts St-EW des Fahrzeugaktuators 302 ist in Fig. 4 weiter detailliert dargestellt. So erfolgt das Ermitteln 11 im vorliegenden Ausführungsbeispiel durch Ermitteln 37 von Umgebungsdaten 39 des Fahrzeugs 200. Diese Umgebungsdaten 39, wie beispielsweise Witterungsdaten oder Steigungsinformationen, werden dann bei einem Ermitteln 41 des Stellgrößen-Erwartungswerts St-EW berücksichtigt. So kann beispielsweise im Verfahren 1 berücksichtigt werden, dass aufgrund einer Gefällestrecke ein größerer Bremsdruck pB ausgesteuert werden muss als in einer Ebene. Ferner umfasst das Ermitteln 11 des Stellgrößen-Erwartungswerts St-EW noch ein Ermitteln 47 des Stellgrößen-Erwartungswerts St-EW, das unter Verwendung von Fahrzeugdaten 45 erfolgt, die in einem vorhergehenden Schritt für eine gegenwärtige Fahrzeugkonfiguration 301 des Fahrzeugs 300 ermittelt werden (Ermitteln 43 in Fig. 4). Im gezeigten Ausführungsbeispiel werden also sowohl Umgebungsdaten 39 als auch Fahrzeugdaten 45 zum Ermitteln 11 des Stellgrößen-Erwartungswerts St-EW berücksichtigt.

Das Ermitteln 47 des Stellgrößen-Erwartungswerts St-EW unter Verwendung von Fahrzeugdaten 45 dient dazu, aktuelle Gegebenheiten des Fahrzeugs 300 zu berücksichtigen. So umfassen die Fahrzeugdaten 45 der gegenwärtigen Fahrzeugkonfiguration 301 vorzugsweise auch Lastinformationen zu einer Beladung des Fahrzeugs. So kann eine Verzögerungsleistung des Fahrzeugs 300 beispielsweise auch dadurch beeinträchtigt sein (bzw. eine Leistungsdiskrepanz 3 des Bremssystems 304 dadurch vorliegen), dass das Fahrzeug 300 überladen ist. Beim Ermitteln 47 des Stellgrößen-Erwartungswerts St-EW unter Verwendung von Fahrzeugdaten 45 wird im gezeigten Ausführungsbeispiel zunächst ein dynamisches Verhalten des Fahrzeugs 300 in der gegenwärtigen Fahrzeugkonfiguration 31 prädiziert (Prädizieren 49 in Fig. 4) und anschließend der Stellgrößen-Erwartungswert St-EW basierend auf dem prädizierten dynamischen Verhalten des Fahrzeugs 300 ermittelt (Ermitteln 51 in Fig. 4). Das Prädizieren 49 kann beispielsweise unter Verwendung eines Fahrzeugmodells, insbesondere eines Einspurmodells, des Fahrzeugs 300 erfolgen. Eine Genauigkeit des Verfahrens 1 wird verbessert.

Es soll verstanden werden, dass das Verfahren 1 zum Ermitteln der Leistungsdiskrepanz 3 für zum Bremssystem 304 verschiedene Fahrzeugaktuatoren 302 im Wesentlichen analog erfolgen kann. Insbesondere kann eine Leistungsdiskrepanz 3 eines anderen Fahrzeugaktuators 302 auch simultan erfolgen. In diesem Fall können sich einige Ermittlungsschritte auch überschneiden.

### Bezugszeichen (Teil der Beschreibung)

- 1: Verfahren
- 3: Leistungsdiskrepanz
- 9: Ermitteln eines Bewegungsfreiheitsgrad-Sollwerts
- 11: Ermitteln eines Stellgrößen-Erwartungswerts
- 13: Ermitteln eines Bewegungsfreiheitsgrad-Istwerts
- 15: Ermitteln eines Stellgrößen-Istwerts
- 17: Erhalten eines Stellgrößen-Maximalwerts
- 19: Ermitteln einer Leistungsdiskrepanz
- 21: Ermitteln eines aktualisierten Bewegungsfreiheitsgrad-Maximalwerts
- 23: Ermitteln einer geplanten Trajektorie
- 29: Ermitteln des Bewegungsfreiheitsgrad-Sollwerts basierend auf einer Trajektorie
- 31: Ermitteln eines Fahrdynamikgrenzwerts
- 33: Fahrdynamikgrenzwert
- 35: Neuermitteln einer Trajektorie
- 37: Ermitteln von Umgebungsdaten
- 39: Umgebungsdaten
- 41: Ermitteln des Stellgrößen-Erwartungswerts unter Verwendung auf Umgebungsdaten
- 43: Ermitteln von Fahrzeugdaten
- 45: Fahrzeugdaten
- 47: Ermitteln des Stellgrößen-Erwartungswerts unter Verwendung von Fahrzeugdaten
- 49: Prädizieren eines dynamischen Fahrverhaltens
- 51: Ermitteln des Stellgrößen-Erwartungswerts basierend auf prädizierten dynamischen Eigenschaften
- 61: Bereitstellen eines Warnsignals
- 63: Warnsignal
- 200: Aktuatorüberwachungssystem
- 202: Überwachungssteuereinheit
- 204: Schnittstelle
- 206: Zustandssignalempfangseinheit
- 208: Bewegungsfreiheitsgrad-Sollwert-Ermittlungseinheit
- 210: Leistungsdiskrepanz-Ermittlungseinheit
- 300: Fahrzeug
- 301: gegenwärtige Fahrzeugkonfiguration
- 302: Fahrzeugaktuatoren
- 304: Bremssystem
- 306, 306a, 306b, 306c, 306d: Bremszylindern
- 308: Räder
- 308a, 308b: Vorderräder
- 308c, 308d: Hinterräder
- 310: Bremsmodulator
- 312: Bremssteuereinheit
- 314: autonome Einheit; virtueller Fahrer
- 316: Fahrzeugnetzwerk
- 318: elektronisch steuerbare Lenkung
- 320: Lenksteuereinheit
- 322: Lenkwelle
- 324: Stellmotor
- 326: Fahrbahn
- 328: Motor
- 330: Motorsteuergerät
- 332: Mensch-Maschine-Schnittstelle
- DoF: Bewegungsfreiheitsgrad
- DoF1: Längsverzögerung
- DoF2: Querbeschleunigung
- DoF3: Gierrate
- DoF4: Längsbeschleunigung
- DoF-Ist: Bewegungsfreiheitsgrad-Istwert
- DoF1-Ist: Längsverzögerung-Istwert
- DoF-Max: Bewegungsfreiheitsgrad-Maximalwert
- DoF-Soll: Bewegungsfreiheitsgrad-Sollwert
- DoF1-Soll: Längsverzögerung-Sollwert
- ΔDoF: Bewegungsfreiheitsgrad-Toleranz
- M: Antriebsmoment
- P: Pfad
- SB: Bremssteuersignale
- SL: Lenksteuersignale
- SM: Motorsteuersignale
- St-EW: Stellgrößen-Erwartungswert
- St1-EW: Bremsdruck-Erwartungswert
- St-Ist: Stellgrößen-Istwert
- St1-Ist: Bremsdruck-Istwert
- St2: Einspritzmenge
- St3: Stellstrom
- ΔSt: Stellgrößen-Toleranz
- SZ: Zustandssignal
- T: Trajektorie
- V: Geschwindigkeit
- V_max: Maximalgeschwindigkeit
- δ: Lenkwinkel

## Patentansprüche

1. Verfahren (1) zum Ermitteln einer Leistungsdiskrepanz (3) zwischen einer Soll-Leistung und einer Ist-Leistung eines Fahrzeugaktuators (302) eines Fahrzeugs (300), wobei der Fahrzeugaktuator (302) dazu ausgebildet ist, zumindest einen Bewegungsfreiheitsgrad (DoF) eines Fahrzeugs (200) zu beeinflussen, wobei das Verfahren (1) umfasst:
- Ermitteln (9) eines Bewegungsfreiheitsgrad-Sollwerts (DoF-Soll) für das Fahrzeug;
- Ermitteln (11) eines Stellgrößen-Erwartungswerts (St-EW) zum Erreichen des Bewegungsfreiheitsgrad-Sollwerts (DoF-Soll);
- Ermitteln (13) eines Bewegungsfreiheitsgrad-Istwerts (DoF-Ist) für das Fahrzeug (300), der zu dem Bewegungsfreiheitsgrad-Sollwert (DoF-Soll) korrespondiert;
- Ermitteln (15) eines Stellgrößen-Istwerts (St-Ist), der zum Erreichen des Bewegungsfreiheitsgrad-Istwerts (DoF-Ist) am Fahrzeugaktuator (302) bereitgestellt wird;
**gekennzeichnet durch**
- Erhalten (17) eines Stellgrößen-Maximalwerts (St-Max) des Fahrzeugaktuators (302); und
- Ermitteln (19) der Leistungsdiskrepanz (3) des Fahrzeugaktuators (302), falls
der Bewegungsfreiheitsgrad-Istwert (DoF-Ist) außerhalb einer Bewegungsfreiheitsgrad- Toleranz (ΔDoF) um den Bewegungsfreiheitsgrad-Sollwert (DoF-Soll) liegt und der Stellgrößen-Istwert (St-Ist) geringer ist als der Stellgrößen-Maximalwert (St-Max);
der Bewegungsfreiheitsgrad-Istwert (DoF-Ist) außerhalb einer Bewegungsfreiheitsgrad- Toleranz (ΔDoF) um den Bewegungsfreiheitsgrad-Sollwert (DoF-Soll) liegt, der Stellgrößen-Erwartungswert (St-EW) dem Stellgrößen-Maximalwert (St-Max) entspricht und der Stellgrößen-Istwert (St-Ist) dem Stellgrößen-Maximalwert (St-Max) entspricht, oder
falls der Bewegungsfreiheitsgrad-Istwert (DoF-Ist) dem Bewegungsfreiheitsgrad-Sollwert (DoF-Soll) entspricht und der zum Erreichen des Bewegungsfreiheitsgrad-Istwerts (DoF-Ist) benötigte Stellgrößen-Istwert (St-Ist) außerhalb einer Stellgrößen-Toleranz (ΔSt) um den Stellgrößen-Erwartungswert (St-EW) liegt; und
- Ermitteln (21) eines aktualisierten Bewegungsfreiheitsgrad-Maximalwerts (DoF-Max) des Fahrzeugs (200) basierend auf der ermittelten Leistungsdiskrepanz (3).

2. Verfahren (1) nach Anspruch 1, wobei das Ermitteln (19) der Leistungsdiskrepanz (3) des Fahrzeugaktuators (302) nur erfolgt,
falls der Bewegungsfreiheitsgrad-Istwert (DoF-Ist) für zumindest eine Diskrepanzzeit außerhalb einer Bewegungsfreiheitsgrad-Toleranz (ΔDoF) um den Bewegungsfreiheitsgrad-Sollwert (DoF-Soll) liegt, oder
falls der zum Erreichen des Bewegungsfreiheitsgrad-Sollwert (DoF-Soll) benötigte Stellgrößen-Istwert (St-Ist) für zumindest die Diskrepanzzeit außerhalb einer Stellgrößen-Toleranz (ΔSt) um den Stellgrößen-Erwartungswert (St-EW) liegt.

3. Verfahren (1) nach Anspruch 1 oder 2, wobei das Ermitteln (9) eines Bewegungsfreiheitsgrad-Sollwerts (DoF-Soll) umfasst:
- Ermitteln (23) einer geplanten Trajektorie (T) für das Fahrzeug (200), durch eine autonome Einheit (27);
- Ermitteln (29) des Bewegungsfreiheitsgrad-Sollwerts (DoF-Soll) aus der Trajektorie (T).

4. Verfahren (1) nach einem der Ansprüche 1 bis 3, ferner aufweisend:
- Ermitteln (31) eines Fahrdynamikgrenzwerts (33) für das Fahrzeug (200) unter Verwendung der ermittelten Leistungsdiskrepanz (3), falls eine Leistungsdiskrepanz (3) des Fahrzeugaktuators (302) ermittelt wird.

5. Verfahren (1) nach Anspruch 3 und 4, ferner aufweisend:
- Neuermitteln (35) der geplanten Trajektorie (T) unter Verwendung des ermittelten Fahrdynamikgrenzwerts (33).

6. Verfahren (1) nach einem der Ansprüche 1 bis 5, wobei das Ermitteln (11) eines Stellgrößen-Erwartungswerts (St-EW) des Fahrzeugaktuators (302) zum Erreichen des Bewegungsfreiheitsgrad-Sollwerts (DoF-Soll) unter Verwendung gelernter Stellgrößen-Istwerte für gelernte Bewegungsfreiheitsgrad-Sollwerte erfolgt, die in einem Bewegungsfreiheitsgrad-Toleranzband um den Bewegungsfreiheitsgrad-Sollwert liegen.

7. Verfahren (1) nach einem der Ansprüche 1 bis 6, wobei das Ermitteln (11) eines Stellgrößen-Erwartungswerts (St-EW) des Fahrzeugaktuators (302) zum Erreichen des Bewegungsfreiheitsgrad-Sollwerts (DoF-Soll) umfasst:
- Ermitteln (37) von Umgebungsdaten (39) des Fahrzeugs (200), und
- Ermitteln (41) des Stellgrößen-Erwartungswerts (St-EW) unter Verwendung der Umgebungsdaten (39).

8. Verfahren (1) nach einem der Ansprüche 1 bis 7, wobei das Ermitteln (11) eines Stellgrößen-Erwartungswerts (St-EW) des Fahrzeugaktuators (302) zum Erreichen des Bewegungsfreiheitsgrad-Sollwerts (DoF-Soll) umfasst:
- Ermitteln (43) von Fahrzeugdaten (45) einer gegenwärtigen Fahrzeugkonfiguration (202) des Fahrzeugs (200), und
- Ermitteln (47) des Stellgrößen-Erwartungswerts (St-EW) unter Verwendung der Fahrzeugdaten (45).

9. Verfahren (1) nach Anspruch 8, wobei das Ermitteln (47) des Stellgrößen-Erwartungswerts (St-EW) unter Verwendung der Fahrzeugdaten (45) umfasst:
- Prädizieren (49) eines dynamischen Verhaltens des Fahrzeugs (200) unter Verwendung der Fahrzeugdaten (45); und
- Ermitteln (51) des Stellgrößen-Erwartungswerts (St-EW) basierend auf dem prädizierten dynamischen Verhalten des Fahrzeugs (200).

10. Verfahren (1) nach einem der Ansprüche 1 bis 9, wobei der Bewegungsfreiheitsgrad (DoF) eine Längsbeschleunigung (DoF4) des Fahrzeugs (300), eine Längsverzögerung (DoF1) des Fahrzeugs (200), eine maximale Krümmung eines Pfades, welche das Fahrzeug (300) maximal befahren kann, eine Lenkwinkelgeschwindigkeit des Fahrzeugs (300), ein Lenkwinkel (δ) des Fahrzeugs (300) oder eine Giergeschwindigkeit des Fahrzeugs (300) ist oder umfasst.

11. Verfahren (1) einem der Ansprüche 1 bis 10, wobei der Fahrzeugaktuator (302) eine aktive Lenkung, ein Bremssystem, eine Parkbremse, eine Dauerbremse , eine Betriebsbremse, ein Radsperrmechanismus, eine Zusatzlenkung, ein Verbrennungsmotor und/oder einen Elektromotor des Fahrzeugs (200) umfasst.

12. Verfahren (1) nach einem der Ansprüche 1 bis 11, wobei das Ermitteln (19) der Leistungsdiskrepanz (3) durch ein Bremssystem (304) des Fahrzeugs (300) erfolgt.

13. Verfahren (1) nach einem der Ansprüche 1 bis 12, ferner umfassend:
- Bereitstellen (61) eines Warnsignals (63), falls eine Leistungsdiskrepanz (3) des Fahrzeugaktuators (302) ermittelt wird, wobei das Warnsignal (63) vorzugsweise mittels einer Mensch-Maschine-Schnittstelle (332) bereitgestellt wird.

14. Verfahren (1) nach einem der Ansprüche 1 bis 13, wobei der Bewegungsfreiheitsgrad-Sollwert (DoF-Soll) basierend auf fahrzeugeigenen Daten ermittelt wird.

15. Aktuatorüberwachungssystem (100) zum Überwachen einer Leistungskenngröße eines Fahrzeugaktuators (302), der dazu ausgebildet ist, zumindest einen Bewegungsfreiheitsgrad (DoF) eines Fahrzeugs (300) zu beeinflussen, das Aktuatorüberwachungssystem (200) aufweisend
eine Zustandssignalempfangseinheit (206), die zum Empfangen von Zustandssignalen (SZ), die einen Bewegungsfreiheitsgrad-Istwert (DoF-Ist) des Fahrzeugs (300) repräsentieren, mit einem Netzwerk (316) des Fahrzeugs (300) verbindbar ist und die zum Empfangen eines Stellgrößen-Istwerts (St-Ist) mit dem Fahrzeugaktuator (302) verbindbar ist,
eine Bewegungsfreiheitsgrad-Sollwert-Ermittlungseinheit (208), die dazu ausgebildet ist, einen Bewegungsfreiheitsgrad-Sollwert (DoF-Soll) für das Fahrzeug (300) und einen Stellgrößen-Erwartungswert (St-EW) des Fahrzeugaktuators (302) zum Erreichen des Bewegungsfreiheitsgrad-Sollwerts (DoF-Soll) zu ermitteln, **gekennzeichnet durch**
eine Leistungsdiskrepanz-Ermittlungseinheit (210), die dazu ausgebildet ist, eine Leistungsdiskrepanz (3) des Fahrzeugaktuators (302) zu ermitteln, falls der Bewegungsfreiheitsgrad-Istwert (DoF-Ist) außerhalb einer Bewegungsfreiheitsgrad-Toleranz (ΔDoF) um den Bewegungsfreiheitsgrad-Sollwert (DoF-Soll) liegt und der Stellgrößen-Istwert (St-Ist) geringer ist als der Stellgrößen-Maximalwert (St-Max);
der Bewegungsfreiheitsgrad-Istwert (DoF-Ist) außerhalb einer Bewegungsfreiheitsgrad-Toleranz (ΔDoF) um den Bewegungsfreiheitsgrad-Sollwert (DoF-Soll) liegt, der Stellgrößen-Erwartungswert (St-EW) dem Stellgrößen-Maximalwert (St-Max) entspricht und der Stellgrößen-Istwert (St-Ist) dem Stellgrößen-Maximalwert (St-Max) entspricht, oder
falls der Bewegungsfreiheitsgrad-Istwert (DoF-Ist) dem Bewegungsfreiheitsgrad-Sollwert (DoF-Soll) entspricht und der zum Erreichen des Bewegungsfreiheitsgrad-Istwerts (DoF-Ist) benötigte Stellgrößen-Istwert (St-Ist) außerhalb einer Stellgrößen-Toleranz (ΔSt) um den Stellgrößen-Erwartungswert (St-EW) liegt, und wobei die Leistungsdiskrepanz-Ermittlungseinheit (210) dazu ausgebildet ist, basierend auf der ermittelten Leistungsdiskrepanz (3) einen aktualisierten Bewegungsfreiheitsgrad-Maximalwerts (DoF-Max) des Fahrzeugs (200) zu ermitteln.

16. Fahrzeug (300), aufweisend einen oder mehrere Fahrzeugaktuatoren (302), zumindest ein Netzwerk (316) und ein Aktuatorüberwachungssystem (200) gemäß Anspruch 15, das zum Empfangen von den Bewegungsfreiheitsgrad-Istwert (DoF-Ist) repräsentierenden Istwert-Daten mit dem Netzwerk (316) verbunden ist.

## Claims

1. Method (1) for determining a performance discrepancy (3) between a target performance and an actual performance of a vehicle actuator (302) of a vehicle (300), the vehicle actuator (302) being configured to influence at least one degree of freedom of movement (DoF) of a vehicle (200), the method (1) comprising:
- determining (9) a target degree of freedom of movement value (DoF-Soll) for the vehicle;
- determining (11) an expected manipulated variable value (St-EW) for achieving the target degree of freedom of movement value (DoF-Soll);
- determining (13) an actual degree of freedom of movement value (DoF-Ist) for the vehicle (300), which corresponds to the target degree of freedom of movement value (DoF-Soll);
- determining (15) an actual manipulated variable value (St-Ist), which is provided at the vehicle actuator (302) for achieving the actual degree of freedom of movement value (DoF-Ist);
**characterized by**
- obtaining (17) a maximum manipulated variable value (St-Max) of the vehicle actuator (302); and
- determining (19) the performance discrepancy (3) of the vehicle actuator (302), if
the actual degree of freedom of movement value (DoF-Ist) lies outside a degree of freedom of movement tolerance (ΔDoF) around the target degree of freedom of movement value (DoF-Soll) and the actual manipulated variable value (St-Ist) is lower than the maximum manipulated variable value (St-Max);
the actual degree of freedom of movement value (DoF-Ist) lies outside a degree of freedom of movement tolerance (ΔDoF) around the target degree of freedom of movement value (DoF-Soll), the expected manipulated variable value (St-EW) corresponds to the maximum manipulated variable value (St-Max), and the actual manipulated variable value (St-Ist) corresponds to the maximum manipulated variable value (St-Max), or
if the actual degree of freedom of movement value (DoF-Ist) corresponds to the target degree of freedom of movement value (DoF-Soll) and the actual manipulated variable value (St-Ist) required for achieving the actual degree of freedom of movement value (DoF-Ist) lies outside a manipulated variable tolerance (ΔSt) around the expected manipulated variable value (St-EW); and
- determining (21) an updated maximum degree of freedom of movement value (DoF-Max) of the vehicle (200) on the basis of the determined performance discrepancy (3).

2. Method (1) according to claim 1, wherein the determining (19) of the performance discrepancy (3) of the vehicle actuator (302) takes place only
if the actual degree of freedom of movement value (DoF-Ist) lies outside a degree of freedom of movement tolerance (ΔDoF) around the target degree of freedom of movement value (DoF-Soll) for at least a discrepancy time, or
if the actual manipulated variable value (St-Ist) required for achieving the target degree of freedom of movement value (DoF-Soll) lies outside a manipulated variable tolerance (ΔSt) around the expected manipulated variable value (St-EW) for at least the discrepancy time.

3. Method (1) according to claim 1 or 2, wherein the determining (9) of a target degree of freedom of movement value (DoF-Soll) comprises:
- determining (23) a planned trajectory (T) for the vehicle (200), via an autonomous unit (27);
- determining (29) the target degree of freedom of movement value (DoF-Soll) from the trajectory (T).

4. Method (1) according to any of claims 1 to 3, further comprising:
- determining (31) a vehicle dynamics limit value (33) for the vehicle (200) using the determined performance discrepancy (3) if a performance discrepancy (3) of the vehicle actuator (302) is determined.

5. Method (1) according to claim 3 and 4, further comprising:
- redetermining (35) the planned trajectory (T) using the determined vehicle dynamics limit value (33).

6. Method (1) according to any of claims 1 to 5, wherein the determining (11) of an expected manipulated variable value (St-EW) of the vehicle actuator (302) for achieving the target degree of freedom of movement value (DoF-Soll) takes place using learned actual manipulated variable values for learned target degree of freedom of movement values which lie in a degree of freedom of movement tolerance band around the target degree of freedom of movement value.

7. Method (1) according to any of claims 1 to 6, wherein the determining (11) of an expected manipulated variable value (St-EW) of the vehicle actuator (302) for achieving the target degree of freedom of movement value (DoF-Soll) comprises:
- determining (37) environmental data (39) of the vehicle (200), and
- determining (41) the expected manipulated variable value (St-EW) using the environmental data (39).

8. Method (1) according to any of claims 1 to 7, wherein the determining (11) of an expected manipulated variable value (St-EW) of the vehicle actuator (302) for achieving the target degree of freedom of movement value (DoF-Soll) comprises:
- determining (43) vehicle data (45) of a current vehicle configuration (202) of the vehicle (200), and
- determining (47) the expected manipulated variable value (St-EW) using the vehicle data (45).

9. Method (1) according to claim 8, wherein the determining (47) of the expected manipulated variable value (St-EW) using the vehicle data (45) comprises:
- predicting (49) a dynamic behavior of the vehicle (200) using the vehicle data (45); and
- determining (51) the expected manipulated variable value (St-EW) on the basis of the predicted dynamic behavior of the vehicle (200).

10. Method (1) according to any of claims 1 to 9, wherein the degree of freedom of movement (DoF) is or comprises a longitudinal acceleration (DoF4) of the vehicle (300), a longitudinal deceleration (DoF1) of the vehicle (200), a maximum curvature of a path that the vehicle (300) can maximally travel along, a steering angle speed of the vehicle (300), a steering angle (δ) of the vehicle (300) or a yaw rate of the vehicle (300).

11. Method (1) any of claims 1 to 10, wherein the vehicle actuator (302) comprises an active steering system, a brake system, a parking brake, a continuous brake, a service brake, a wheel locking mechanism, an auxiliary steering system, an internal combustion engine and/or an electric motor of the vehicle (200).

12. Method (1) according to any of claims 1 to 11, wherein the determining (19) of the performance discrepancy (3) takes place via a brake system (304) of the vehicle (300).

13. Method (1) according to any of claims 1 to 12, further comprising:
- providing (61) a warning signal (63) if a performance discrepancy (3) of the vehicle actuator (302) is determined, wherein the warning signal (63) is provided preferably by means of a human-machine interface (332).

14. Method (1) according to any of claims 1 to 13, wherein the target degree of freedom of movement value (DoF-Soll) is determined on the basis of vehicle-specific data.

15. Actuator monitoring system (100) for monitoring a performance characteristic of a vehicle actuator (302) which is configured to influence at least one degree of freedom of movement (DoF) of a vehicle (300), the actuator monitoring system (200) comprising
a state signal receiving unit (206) which can be connected to a network (316) of the vehicle (300) in order to receive state signals (SZ) that represent an actual degree of freedom of movement value (DoF-Ist) of the vehicle (300) and which can be connected to the vehicle actuator (302) in order to receive an actual manipulated variable value (St-Ist),
a target degree of freedom of movement value determination unit (208) which is configured to determine a target degree of freedom of movement value (DoF-Soll) for the vehicle (300) and an expected manipulated variable value (St-EW) of the vehicle actuator (302) for achieving the target degree of freedom of movement value (DoF-Soll),
**characterized by**
a performance discrepancy determination unit (210) which is configured to determine a performance discrepancy (3) of the vehicle actuator (302) if
the actual degree of freedom of movement value (DoF-Ist) lies outside a degree of freedom of movement tolerance (ΔDoF) around the target degree of freedom of movement value (DoF-Soll) and the actual manipulated variable value (St-Ist) is lower than the maximum manipulated variable value (St-Max);
the actual degree of freedom of movement value (DoF-Ist) lies outside a degree of freedom of movement tolerance (ΔDoF) around the target degree of freedom of movement value (DoF-Soll), the expected manipulated variable value (St-EW) corresponds to the maximum manipulated variable value (St-Max), and the actual manipulated variable value (St-Ist) corresponds to the maximum manipulated variable value (St-Max), or
if the actual degree of freedom of movement value (DoF-Ist) corresponds to the target degree of freedom of movement value (DoF-Soll) and the actual manipulated variable value (St-Ist) required for achieving the actual degree of freedom of movement value (DoF-Ist) lies outside a manipulated variable tolerance (ΔSt) around the expected manipulated variable value (St-EW), and the performance discrepancy determination unit (210) being configured to determine an updated maximum degree of freedom of movement value (DoF-Max) of the vehicle (200) on the basis of the determined performance discrepancy (3).

16. Vehicle (300) comprising one or more vehicle actuators (302), at least one network (316), and an actuator monitoring system (200) according to claim 15, which is connected to the network (316) in order to receive actual value data that represent the actual degree of freedom of movement value (DoF-Ist).

## Revendications

1. Procédé (1) permettant de déterminer un écart de puissance (3) entre une puissance de consigne et une puissance réelle d'un actionneur de véhicule (302) d'un véhicule (300), dans lequel l'actionneur de véhicule (302) est conçu pour influencer au moins un degré de liberté de mouvement (DoF) d'un véhicule (200), dans lequel le procédé (1) comprend :
- la détermination (9) d'une valeur de consigne de degré de liberté de mouvement (DoF-Soll) pour le véhicule ;
- la détermination (11) d'une valeur attendue de grandeur de réglage (St-EW) pour l'atteinte de la valeur de consigne de degré de liberté de mouvement (DoF-Soll) ;
- la détermination (13) d'une valeur réelle de degré de liberté de mouvement (DoF-Ist) pour le véhicule (300) qui correspond à la valeur de consigne de degré de liberté de mouvement (DoF-Soll) ;
- la détermination (15) d'une valeur réelle de grandeur de réglage (St-Ist) qui est fournie à l'actionneur de véhicule (302) pour l'atteinte de la valeur réelle de degré de liberté de mouvement (DoF-Ist) ;
**caractérisé par**
- l'obtention (17) d'une valeur maximale de grandeur de réglage (St-Max) de l'actionneur de véhicule (302) ; et
- la détermination (19) de l'écart de puissance (3) de l'actionneur de véhicule (302) si
la valeur réelle de degré de liberté de mouvement (DoF-Ist) se situe en dehors d'une tolérance de degré de liberté de mouvement (ΔDoF) de la valeur de consigne de degré de liberté de mouvement (DoF-Soll) et la valeur réelle de grandeur de réglage (St-Ist) est inférieure à la valeur maximale de grandeur de réglage (St-Max) ;
la valeur réelle de degré de liberté de mouvement (DoF-Ist) se situe en dehors d'une tolérance de degré de liberté de mouvement (ΔDoF) de la valeur de consigne de degré de liberté de mouvement (DoF-Soll), la valeur attendue de grandeur de réglage (St-EW) correspond à la valeur maximale de grandeur de réglage (St-Max) et la valeur réelle de grandeur de réglage (St-Ist) correspond à la valeur maximale de grandeur de réglage (St-Max), ou
si la valeur réelle de degré de liberté de mouvement (DoF-Ist) correspond à la valeur de consigne de degré de liberté de mouvement (DoF-Soll) et la valeur réelle de grandeur de réglage (St-Ist) nécessaire pour l'atteinte de la valeur réelle de degré de liberté de mouvement (DoF-Ist) se situe en dehors d'une tolérance de grandeur de réglage (ΔSt) de la valeur attendue de grandeur de réglage (St-EW) ; et
- la détermination (21) d'une valeur maximale de degré de liberté de mouvement actualisée (DoF-Max) du véhicule (200) sur la base de l'écart de puissance (3) déterminé.

2. Procédé (1) selon la revendication 1, dans lequel la détermination (19) de l'écart de puissance (3) de l'actionneur de véhicule (302) n'est effectuée que
si la valeur réelle de degré de liberté de mouvement (DoF-Ist) se situe en dehors d'une tolérance de degré de liberté de mouvement (ΔDoF) de la valeur de consigne de degré de liberté de mouvement (DoF-Soll) pendant au moins un temps de divergence, ou
si la valeur réelle de grandeur de réglage (St-Ist) nécessaire pour l'atteinte de la valeur de consigne de degré de liberté de mouvement (DoF-Soll) se situe en dehors d'une tolérance de grandeur de réglage (ΔSt) de la valeur attendue de grandeur de réglage (St-EW) pendant au moins le temps de divergence.

3. Procédé (1) selon la revendication 1 ou 2, dans lequel la détermination (9) d'une valeur de consigne de degré de liberté de mouvement (DoF-Soll) comprend :
- la détermination (23) d'une trajectoire (T) prévue pour le véhicule (200) par une unité autonome (27) ;
- la détermination (29) de la valeur de consigne de degré de liberté de mouvement (DoF-Soll) à partir de la trajectoire (T).

4. Procédé (1) selon l'une des revendications 1 à 3, présentant en outre :
- la détermination (31) d'une valeur limite de dynamique de conduite (33) pour le véhicule (200) à l'aide de l'écart de puissance (3) déterminé, si un écart de puissance (3) de l'actionneur de véhicule (302) est déterminé.

5. Procédé (1) selon les revendications 3 et 4, présentant en outre :
- la détermination à nouveau (35) de la trajectoire (T) prévue à l'aide de la valeur limite de dynamique de conduite (33) déterminée.

6. Procédé (1) selon l'une des revendications 1 à 5, dans lequel la détermination (11) d'une valeur attendue de grandeur de réglage (St-EW) de l'actionneur de véhicule (302) pour l'atteinte de la valeur de consigne de degré de liberté de mouvement (DoF-Soll) est effectuée à l'aide de valeurs réelles de grandeur de réglage apprises pour des valeurs de consigne de degré de liberté de mouvement apprises qui se situent dans une plage de tolérance de degré de liberté de mouvement de la valeur de consigne de degré de liberté de mouvement.

7. Procédé (1) selon l'une des revendications 1 à 6, dans lequel la détermination (11) d'une valeur attendue de grandeur de réglage (St-EW) de l'actionneur de véhicule (302) pour l'atteinte de la valeur de consigne de degré de liberté de mouvement (DoF-Soll) comprend :
- la détermination (37) de données d'environnement (39) du véhicule (200), et
- la détermination (41) de la valeur attendue de grandeur de réglage (St-EW) à l'aide des données d'environnement (39).

8. Procédé (1) selon l'une des revendications 1 à 7, dans lequel la détermination (11) d'une valeur attendue de grandeur de réglage (St-EW) de l'actionneur de véhicule (302) pour l'atteinte de la valeur de consigne de degré de liberté de mouvement (DoF-Soll) comprend :
- la détermination (43) de données de véhicule (45) d'une configuration de véhicule actuelle (202) du véhicule (200), et
- la détermination (47) de la valeur attendue de grandeur de réglage (St-EW) à l'aide des données de véhicule (45).

9. Procédé (1) selon la revendication 8, dans lequel la détermination (47) de la valeur attendue de grandeur de réglage (St-EW) à l'aide des données de véhicule (45) comprend :
- la prédiction (49) d'un comportement dynamique du véhicule (200) à l'aide des données de véhicule (45) ; et
- la détermination (51) de la valeur attendue de grandeur de réglage (St-EW) en fonction du comportement dynamique prédit du véhicule (200).

10. Procédé (1) selon l'une des revendications 1 à 9, dans lequel le degré de liberté de mouvement (DoF) est ou comprend une accélération longitudinale (DoF4) du véhicule (300), une décélération longitudinale (DoF1) du véhicule (200), une courbure maximale d'une trajectoire que le véhicule (300) peut suivre au maximum, une vitesse angulaire de braquage du véhicule (300), un angle de braquage (δ) du véhicule (300) ou une vitesse de lacet du véhicule (300).

11. Procédé (1) selon l'une des revendications 1 à 10, dans lequel l'actionneur de véhicule (302) comprend une direction active, un système de freinage, un frein de stationnement, un frein continu, un frein de service, un mécanisme de blocage de roue, une direction auxiliaire, un moteur à combustion interne et/ou un moteur électrique du véhicule (200).

12. Procédé (1) selon l'une des revendications 1 à 11, dans lequel la détermination (19) de l'écart de puissance (3) est effectuée par un système de freinage (304) du véhicule (300).

13. Procédé (1) selon l'une des revendications 1 à 12, comprenant en outre :
- la fourniture (61) d'un signal d'avertissement (63) si un écart de puissance (3) de l'actionneur de véhicule (302) est déterminé, dans lequel le signal d'avertissement (63) est de préférence fourni au moyen d'une interface homme-machine (332).

14. Procédé (1) selon l'une des revendications 1 à 13, dans lequel la valeur de consigne de degré de liberté de mouvement (DoF-Soll) est déterminée en fonction de données propres au véhicule.

15. Système de surveillance d'actionneur (100) permettant de surveiller une caractéristique de puissance d'un actionneur de véhicule (302) conçu pour influencer au moins un degré de liberté de mouvement (DoF) d'un véhicule (300), le système de surveillance d'actionneur (200) présentant
une unité de réception de signaux d'état (206) qui, pour la réception de signaux d'état (SZ) représentant une valeur réelle de degré de liberté de mouvement (DoF-Ist) du véhicule (300), peut être connectée à un réseau (316) du véhicule (300) et qui, pour la réception d'une valeur réelle de grandeur de réglage (St-Ist), peut être connectée à l'actionneur de véhicule (302),
une unité de détermination de valeur de consigne de degré de liberté de mouvement (208) qui est configurée pour déterminer une valeur de consigne de degré de liberté de mouvement (DoF-Soll) pour le véhicule (300) et une valeur attendue de grandeur de réglage (St-EW) de l'actionneur de véhicule (302) pour l'atteinte de la valeur de consigne de degré de liberté de mouvement (DoF-Soll),
**caractérisé par**
une unité de détection d'écart de puissance (210) qui est configurée pour déterminer un écart de puissance (3) de l'actionneur de véhicule (302) si
la valeur réelle de degré de liberté de mouvement (DoF-Ist) se situe en dehors d'une tolérance de degré de liberté de mouvement (ΔDoF) de la valeur de consigne de degré de liberté de mouvement (DoF-Soll) et la valeur réelle de grandeur de réglage (St-Ist) est inférieure à la valeur maximale de grandeur de réglage (St-Max) ;
la valeur réelle de degré de liberté de mouvement (DoF-Ist) se situe en dehors d'une tolérance de degré de liberté de mouvement (ΔDoF) de la valeur de consigne de degré de liberté de mouvement (DoF-Soll), la valeur attendue de grandeur de réglage (St-EW) correspond à la valeur maximale de grandeur de réglage (St-Max) et la valeur réelle de grandeur de réglage (St-Ist) correspond à la valeur maximale de grandeur de réglage (St-Max), ou
si la valeur réelle de degré de liberté de mouvement (DoF-Ist) correspond à la valeur de consigne de degré de liberté de mouvement (DoF-Soll) et la valeur réelle de grandeur de réglage (St-Ist) nécessaire pour l'atteinte de la valeur réelle de degré de liberté de mouvement (DoF-Ist) se situe en dehors d'une tolérance de grandeur de réglage (ΔSt) de la valeur attendue de grandeur de réglage (St-EW), et dans lequel l'unité de détermination d'écart de puissance (210) est configurée pour déterminer, en fonction de l'écart de puissance (3) déterminé, une valeur maximale de degré de liberté de mouvement actualisée (DoF-Max) du véhicule (200).

16. Véhicule (300), présentant un ou plusieurs actionneurs de véhicule (302), au moins un réseau (316) et un système de surveillance d'actionneur (200) selon la revendication 15 qui est connecté au réseau (316) pour recevoir des données de valeur réelle représentant la valeur réelle de degré de liberté de mouvement (DoF-Ist).
